# EUROPÄISCHE PATENTSCHRIFT

(11) **EP 4 150 492 B1**
(45) Veröffentlichungstag und Bekanntmachung des Hinweises auf die Patenterteilung: **18.12.2024**
(21) Anmeldenummer: 21724714.7
(22) Anmeldetag: 14.05.2021
(51) Int. Cl.: G06F 21/44, G06F 21/57

(54) **VERFAHREN UND SECURE-ELEMENT ZUM NACHWEIS EINER VERTRAUENSWÜRDIGEN ELEKTRONISCHEN BAUGRUPPE**
METHOD AND SECURE ELEMENT FOR DETECTING A TRUSTED ELECTRONIC ASSEMBLY
PROCÉDÉ ET ÉLÉMENT SÉCURISÉ DE DÉTECTION D'UN ENSEMBLE ÉLECTRONIQUE DE CONFIANCE

(30) Priorität: 14.05.2020 EP 20174702
(43) Veröffentlichungstag der Anmeldung: 22.03.2023
(73) Patentinhaber: Wibu-Systems AG, 76137 Karlsruhe (DE)
(72) Erfinder: FUST, Ralf, 76448 Durmersheim (DE); WINZENRIED, Oliver, 76137 Karlsruhe (DE); NEIFER, Wolfgang, 76137 Karlsruhe (DE)
(74) Vertreter: Durm Patentanwälte PartG mbB
(86) Internationale Anmeldenummer: PCT/EP2021/062892
(87) Internationale Veröffentlichungsnummer: WO 2021/229084

(56) Entgegenhaltungen:
- US-A1- 2011 296 201
- US-A1- 2012 131 334
- US-A1- 2020 084 202
- EIMEAR GALLERY ET AL: "Trusted Mobile Platforms", 18 August 2007, FOUNDATIONS OF SECURITY ANALYSIS AND DESIGN IV; [LECTURE NOTES IN COMPUTER SCIENCE], SPRINGER BERLIN HEIDELBERG, BERLIN, HEIDELBERG, PAGE(S) 282 - 323, ISBN: 978-3-540-74809-0, XP019099702

## Beschreibung

Die vorliegende Erfindung betrifft ein Verfahren zum Nachweis vertrauenswürdiger Elektronik, insbesondere elektronischer Baugruppen und Hardwarekomponenten sowie ein Secure-Element zum Nachweis der Vertrauenswürdigkeit einer elektronischen Baugruppe, insbesondere mit vertrauenswürdiger Elektronik, bevorzugt mit Anwendungen, für kritische Infrastrukturen.

Für Hersteller eingebetteter Systeme ist die Entwicklung und die Bereitstellung vertrauenswürdiger Elektronik mit Anwendungen für kritische Infrastrukturen von größter Bedeutung. Insbesondere von der Elektronik, wie sie in "digitalen Fabriken" oder in hochautomatisierten Prozessen zum Einsatz kommt, wird im höchsten Maße Verlässlichkeit und Verfügbarkeit erwartet. Dies gilt insbesondere für kritische Infrastrukturen, wie beispielsweise in der Medizintechnik, Verkehrstechnik oder auch in der Nahrungsmittelherstellung. In diesen Infrastrukturen bestehen jeweils besondere Anforderungen an die Vertrauenswürdigkeit von Geräten, Produktions- und Gerätetechnik. Das Vertrauen beruht auf einer Zertifizierbarkeit und einer Überprüfbarkeit der Geräte sowie deren elektronischen Baugruppen und (Hardware-)Komponenten. In globalisierten Fertigungsketten ist die Nachverfolgbarkeit der Vertrauenswürdigkeit von Elektronikkomponenten in allen Prozessen wie Fertigung (Split Manufacturing) und Inbetriebnahme durch die Hersteller, die Systemintegratoren als auch durch die Betreiber dieser Komponenten besonders wichtig. Grundsätzlich eignet sich auch die praxisnahe Nachverfolgung vertrauenswürdiger Produkte im transnationalen Warenaustauch z.B. an Zollstationen zum Nachweis eines Ursprungszeugnisses, welcher digital abgefragt werden kann. Die Dokumente US 2012/131334 und US 2011/296201 bilden den Stand der Technik ab.

Der vorliegenden Erfindung liegt die Aufgabe zugrunde ein Verfahren und eine Vorrichtung vorzuschlagen, mit dem ein robuster und zuverlässiger Nachweis der Vertrauenswürdigkeit einer elektronischen Baugruppe geführt werden kann. Die vorliegende Aufgabe wird gelöst durch ein Verfahren mit den Merkmalen des Anspruchs 1 und durch ein Secure-Element mit den Merkmalen des Anspruchs 11.

Gemäß einem ersten Aspekt betrifft die Erfindung ein Verfahren zum Nachweis einer vertrauenswürdigen elektronischen Baugruppe mit einer CPU, einem Bus-Interface und einem Secure-Element, das einen Ursprungsnachweis umfasst und das einen Record-Speicher mit einem Soll-Zustandswert der Baugruppe hat. Das Verfahren umfasst die folgenden Schritte: Ermitteln eines Ist-Zustandswert eines Ist-Zustands der Baugruppe, optionales Abspeichern des Ist-Zustands in einem Record des Record-Speichers, optionales prüfen und optionales ermitteln, ob die Baugruppe ein Secure-Element mit Ursprungsnachweis hat, auslesen des Soll-Zustandswerts aus dem Record-Speicher, wobei der Soll-Zustandswert einen Soll-Zustand der Baugruppe darstellt, prüfen des Secure-Elements auf Echtheit durch Überprüfen des Ursprungsnachweises des Secure-Elements, verarbeiten des Ist-Zustandswerts und des Soll-Zustandswerts und/oder vergleichen des Soll-Zustands und des Ist-Zustands und bewerten und entscheiden, ob der Ist-Zustand mit dem Soll-Zustand insoweit ähnlich oder kompatibel ist oder übereinstimmt, dass ein Vertrauenskriterium erfüllt ist. Der Ist-Zustand und der Soll-Zustand der Baugruppe stellt die Zusammensetzung der Baugruppe und ihrer Bauteile und Komponenten dar. Bei Gleichheit der Zustände entspricht die Baugruppe dem Original-Zustand bei der Produktion oder der ersten Inbetriebnahme und umfasst die Komponenten und Bauteile, die ursprünglich verbaut wurden. Ähnlichkeit der Zustände kann dann gegeben sein, wenn eine vorbestimmte Anzahl von Bauteilen gleich ist oder gleiche Eigenschaften oder Merkmale aufweist.

Beispielsweise könnte der Baugruppe vertraut werden, also das festgelegte Vertrauenskriterium erfüllt sein, wenn 70% der Bauteile identisch sind (z.B. Identität einer Seriennummer), wobei bestimmte Bauteile der Baugruppe in diese Gruppe der 70% fallen müssen. Ausreichende Kompatibilität kann vorliegen, wenn beispielsweise mindestens 40% der Bauteile gleich sind und weitere 50% gleiche Eigenschaften, z.B. elektrische Eigenschaften oder Stromverläufe beim Booten o.ä., aufweisen, wobei festgelegt sein kann, dass bestimmte Bauteile identisch sein müssen. Diese Vertrauenskriterien können von dem Hersteller oder Inbetriebnehmer der Baugruppe vorgegeben werden oder von dem Benutzer der Baugruppe, um nachträgliche Veränderungen oder Manipulationen auszuschließen.

Der Soll-Zustandswert kann dynamische Daten einer Komponente oder der Baugruppe umfassen, wie etwa einen Spannungs- und Stromverlauf beim Hochfahren oder Starten der Komponente oder Baugruppe,

Der Soll-Zustandswert kann auch statische Daten der Baugruppe und/oder einer Komponente umfassen, wie beispielsweise die Seriennummer, das Produktionsdatum, eine Produktionscharge oder Baureihe, Strom- oder Spannungswerte, Taktfrequenzen oder ähnliche Parameter, die die Komponente beschreiben und charakterisieren.

Der Soll-Zustandswert kann auch kryptografische Operationen mit auf der Baugruppe verteilten IP-Elementen umfassen. Dies sind z.B. Schlüssel, Physical unclonable Functions (PUF), Physical obfuscated Keys (POK).

Die Ist-Zustandswerte korrelieren mit den Soll-Zustandswerten. Es werden also die Werte oder Parameter abgefragt, die als Soll-Zustandswerte hinterlegt sind. Dabei kann das Ermitteln ein Empfangen des Ist-Zustandswerts der Baugruppe, einer Komponente der Baugruppe oder einer externen Komponente einschließen. Eine Komponente könnte z.B. ein Sensor, ein Speicher, eine SD-Card, eine CPU, ein SoC (System on Chip) oder eine IP mit einzigartiger ID (Identität) oder Schlüssel, o.ä. sein. Es können auch Sensoren oder Prozessoren und Verarbeitungseinheiten abgefragt werden, um die Ist-Zustandswerte zu ermitteln. Der Ist-Zustandswert kann auch statische Daten einer Komponente umfassen, wie oben beispielsweise aufgeführt, also etwa die Seriennummer, das Produktionsdatum, eine Produktionscharge oder Baureihe, Strom- oder Spannungswerte, Taktfrequenzen, Schlüssel, Physical unclonable Functions, Physical obfuscated Keys oder ähnliche Parameter, die die Komponente beschreiben und charakterisieren.

Das Verarbeiten des Ist-Zustandswerts und des Soll-Zustandswerts kann ein Umformen oder Auslesen einzelner Werte oder Parameter aus dem Zustandswerten umfassen. Es kann abgefragt werden, ob bestimmte Parameter oder Komponenten aktuell in der Baugruppe vorhanden sind und zum Zeitpunkt des definierten Soll-Zustands ebenfalls vorhanden waren. Gegebenenfalls können einzelne Parameter mit kryptografischen Schlüsseln oder anderen Nachweisen bearbeitet oder kombiniert werden, bevor eine Entscheidung über die Vertrauenswürdigkeit der Baugruppe getroffen werden kann. In einer einfachen Ausführungsform können Soll-Zustand bzw. Soll-Zustandswert mit dem Ist-Zustand bzw. Ist-Zustandswert verglichen werden.

Das Vertrauenskriterium ist definiert als Auswertungsalgorithmus einer Anzahl von Istwerten (Ist-Zustandswerten) mit einer Anzahl von Sollwerten (Soll-Zustandswerten). In einer einfachen Ausführung wird auf Gleichheit geprüft, also jeder Istwert mit dem zughörigen Sollwert verglichen und bei Gleichheit ist das Vertrauenskriterium erfüllt. Der Auswertungsalgorithmus kann auch durch eine KI-Einheit erfolgen. In diesem Fall besteht der Sollzustand aus den zuvor ermittelten Parametern eines zuvor bestimmten KI-Algorithmus. Der Auswertungsalgorithmus kann auch aus einer als Ist-Zustand erhaltenen Datenreihe mit ergänzten Fehlerkorrekturdaten bestehen, um eine tolerierbare Abweichung zu ermöglichen.

Das Vertrauenskriterium gilt als erfüllt, wenn eine vorher bestimmte Anzahl an Werten oder Parametern des Ist-Zustand mit dem Soll-Zustand exakt oder teilweise übereinstimmen, also wenn die Übereinstimmung zwischen den Ist-Zustandswerten und den entsprechenden, mit anderen Worten korrespondierenden, Soll-Zustandswerten vorliegt. Die Werte oder Parameter können auch in einer gewichteten Form eine normierte Maßzahl zwischen 0 und 1 ergeben oder umfassen. Diese muss dann gleich oder größer als ein vorher bestimmter Schwellwert sein. Die Werte oder Parameter können einzeln oder zusammengefasst als Schlüssel zum Verschlüsseln einer "Challenge" übertragen werden. Die Zusammenfassung von Werten kann optional außerhalb der Überprüfungseinheit stattfinden. Die Zusammenfassung von Werten kann bevorzugt auch mit Hilfe einer KI-Einheit (Künstliche Intelligenz Einheit) durchgeführt werden, auf der beispielsweise Neuronale Netze, Petri-Netze, Hidden-Markov-Model o.ä. implementiert sind. Die Zusammenfassung von Werten kann auch als Daten, die optional verschlüsselt werden, übertragen werden.

Der Auswertungsalgorithmus kann auch aus einer gewichteten und normierten Bewertung mehrerer Werte und Parameter des Istzustands erfolgen, und eine Maßzahl der Übereinstimmung zwischen Soll- und Istzustand darstellen [0..1] und die Vertrauensdefinition durch einen Schwellwert bestimmt werden. Das Durchführen eines Echtheitsnachweises des Secure-Elements erfolgt mittels Überprüfens des Ursprungsnachweises des Secure-Elements. Das Überprüfen kann umfassen, dass abgefragt wird, ob ein Ursprungsnachweis vorhanden ist oder ob der Ursprungsnachweis eine bestimmte Form aufweist, beispielsweise ein Zertifikat umfasst. Weitergehende Prüfungen der Echtheit des Secure-Elements können vorgesehen sein, beispielsweise Prüfung des Ursprungszertifikats über eine Public Key Infrastruktur (PKI) oder eine Prüfung der Anwesenheit eines Privaten Schlüssels im Secure-Element.

Das erfindungsgemäße Verfahren kann von einer CPU oder Verarbeitungseinheit bzw. Prozessoreinheit angestoßen und ausgelöst werden und wenigstens teilweise in der CPU bzw. Verarbeitungseinheit ablaufen. Das Verfahren kann alternativ auch in einer Hardware-Komponente wenigstens teilweise ablaufen oder angestoßen werden, etwa in einem FPGA mit zusätzlich erzeugtem Secure-Prozessor. In diesen Fällen wird beim Ablauf des Verfahrens abgefragt und geprüft, ob ein Secure-Element auf der Baugruppe vorhanden ist und ob es einen Ursprungsnachweis aufweist. Wird das Verfahren in einem Secure-Element ausgeführt, kann dieser Verfahrensschritt entfallen oder reduziert werden auf das Ermitteln und Prüfen, ob ein Ursprungsnachweis vorhanden ist.

Das erfindungsgemäße Verfahren hat den Vorteil, dass auf einfache, schnelle und sichere sowie robuste Weise festgestellt werden kann, ob die Baugruppe einem Soll-Zustand entspricht und ob die Baugruppe bzw. Komponenten seit der Produktion unverändert sind. Durch das Verfahren kann ausgeschlossen werden, dass Teile der Baugruppe verändert und Komponenten ausgewechselt wurden oder Teile der Komponenten nicht oder nicht mehr original sind. Voraussetzung ist, dass die Baugruppe ein Secure-Element aufweist, das einen Sicherheits- bzw. Echtheitsnachweis (Ursprungsnachweis) und einen Record-Speicher hat, in dem wenigstens Soll-Zustandswerte eines Sollzustands am Ende der Produktion oder bevorzugt in einer (sicheren) Inbetriebnahmephase abgespeichert sind.

Die Erfindung ermöglicht ferner eine gesicherte und vertrauenswürdige und fälschungssichere Wertschöpfungskette vom Halbleiterhersteller über die Hersteller der Elektronikbaugruppen bis hin zur Fertigstellung betriebsbereiter Produkte. Dazu gehören bevorzugt, neben den Nachweisen aus den Produktionsrecords (Soll-Zustandswerte), auch die Ursprungsnachweise zu einzelnen Bestandteilen der Baugruppe (Halbleiter-Systemkomponenten) mit Identitäten, die bevorzugt lokal ableitbar und überprüfbar sind bei der ersten Inbetriebnahme, bevorzugt anhand von im Secure-Element gespeicherten Schlüsseln, signierten Fingerprints bzw. Hashwerten und Ursprungszertifikaten. Insbesondere die auf Vertrauenswürdigkeit ausgerichtete Verzahnung von Hard- und Software wird mittels der Erfindung ermöglicht. Die Ausgestaltung der Records of Trust auf lokaler Systemebene zur Gestaltung und Überwachung von Systemintegrität ist eine bevorzugte Realisierung.

Die bevorzugt kryptografische "Verlinkung" bevorzugt aller ID-Merkmale führt zur Komposition (Erzeugung) einer neuen, nicht veränderbaren Identität der Baugruppe, die mit der ersten Inbetriebnahme der Hardware-Logik und bevorzugt der Software die vertrauenswürdige, digitale Identität repräsentiert. Diese dient, zusammen mit einem zuvor generierten Ursprungsnachweis bzw. Zertifikat, zum eigenständigen Echtheitsnachweis in weiteren Phasen einer Inbetriebnahme.

Vorteilhaft ist Flexibilität in der Anwendung des Verfahrens. Es kann sowohl in kleinen Baugruppen mit wenigen Systemressourcen als auch in Multiprozessorsystemen Anwendung finden. Um den unerlaubten Austausch von Halbleiterkomponenten zu unterbinden, kann das Erfassen von einer Mehrzahl von Komponenten mit entsprechender Mehrzahl von abgespeicherten Merkmalen die Zahl der überprüfbaren Record-Daten und dadurch den Schutz vor Nachbau erhöhen. Bevorzugt kann bereits in der Produktion geplant oder festgelegt werden, wie sicherheitskritische Fertigungsschritte einschließlich der Erfassung von Record-Daten (Soll-Zustandswerte) implementiert werden und mit anderen, beispielsweise Software betreffenden, Komponenten abgestimmt werden können.

Sind Referenzmuster einer Baugruppe vorhanden, lässt sich der Automatisierungsgrad der Fertigung vorteilhaft auch in vergleichsweise unsicherer Fertigungsumgebung durchführen. Beispielsweise könnten die Anwendung von Baugruppen-Selbsttests dazu einen Beitrag liefern und die Herstellungskosten reduzieren, ohne die angestrebten Vertrauenswürdigkeit einzuschränken.

In einem weiteren Aspekt betrifft die Erfindung ein Secure-Element zum Nachweis der Vertrauenswürdigkeit einer elektronischen Baugruppe, wobei das Secure-Element eine Steuereinheit, einen Record-Speicher und einen Secure-Speicher sowie ein optionales Interface umfasst. Der Record-Speicher umfasst einen Soll-Zustandswert der Baugruppe. Das Secure-Element weist einen Public-Key des Ursprungsnachweises auf, der an eine anfragende Verarbeitungseinheit bzw. CPU der Baugruppe ausgebbar ist. Der Secure-Speicher des Secure-Elements umfasst einen Private-Key eines Ursprungsnachweises. Die Steuereinheit des Secure-Elements zum Nachweis der Vertrauenswürdigkeit ist eingerichtet und ausgebildet, um einen Ist-Zustandswert der Baugruppe zu empfangen und zu verarbeiten, eine Anfrage der Verarbeitungseinheit, ob ein Ursprungsnachweis in dem Secure-Element vorhanden ist, unter Verwendung des Private-Keys, zu beantworten, und den Soll-Zustandswert der Baugruppe aus dem Record-Speicher auszulesen. Die Steuereinheit ist ferner dazu eingerichtet und ausgebildet, um den Ist-Zustandswert und den Soll-Zustandswert zu verarbeiten und/oder zu vergleichen und um zu bewerten und/oder zu entscheiden, ob der Ist-Zustand mit dem Soll-Zustand insoweit ähnlich oder kompatibel ist oder übereinstimmt, dass ein Vertrauenskriterium erfüllt ist.

Ein weiterer Aspekt der Erfindung betrifft eine elektronische Baugruppe mit einer CPU (Verarbeitungseinheit), einem Bus-Interface und einem Speicher. Die Baugruppe umfasst ein Secure-Element zum Nachweis der Vertrauenswürdigkeit der Baugruppe, wobei das Secure-Element eine Steuereinheit, einen Record-Speicher und einen Secure-Speicher hat, und wobei bevorzugt das Secure-Element dazu eingerichtet und ausgebildet ist, das oben beschriebene erfindungsgemäße Verfahren wenigstens teilweise, bevorzugt vollständig auszuführen.

Ein weiterer Aspekt der Erfindung betrifft eine Hardwarekomponente zum Nachweis einer vertrauenswürdigen elektronischen Baugruppe. Die Hardwarekomponente hat einen geschützten Security-Prozessor, einen Record-Speicher und einen Secure-Speicher. Die Hardwarekomponente ist eine Komponente der zu überprüfenden Baugruppe und dazu eingerichtet und ausgebildet, das obige Verfahren auszuführen. Beispielsweise kann die Hardwarekomponente Teil eines Systems on Chip (SoC) der Baugruppe sein. Die Hardwarekomponente kann auch mittels eines Interfaces mit der Baugruppe verbunden sein, bevorzugt lösbar verbunden.

Weitere Aspekte der Erfindung betreffen ein Computerprogram und ein Computerprogrammprodukt mit Programmcode zum Durchführen der Schritte des Verfahrens, wenn der Programmcode auf einem Computer oder einer Hardwarekomponente oder elektronischen Baugruppe ausgeführt wird, sowie ein Speichermedium, auf dem ein Computerprogramm gespeichert ist, das, wenn es auf einem Computer oder einer CPU ausgeführt wird, eine Ausführung des hierin beschriebenen Verfahrens bewirkt.

Das Secure-Element kann auch in einem Multiprozessorsystem in einem Prozessor ausgeführt werden, der auf einen Record-Speicher mit Soll-Zustandswert und auf einen Secure-Speicher mit Ursprungsnachweis zugreifen kann. Das Secure-Element könnte beispielsweise auch in einem FPGA integriert sein. In diesen Fällen kann die Überprüfung des Ursprungsnachweises entfallen, wobei bevorzugt abgefragt wird, ob ein Ursprungsnachweis vorhanden ist.

Alternativ könnte das Secure-Element auch ausschließlich in Software oder einem Computerprogramm implementiert sein. Somit wären alle Funktionen eines Secure-Elements in Software realisiert. Die Software kann in diesen Fällen auf die notwendigen Speicher zugreifen.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung in den abhängigen Ansprüchen beschriebenen Ausgestaltungen ausgeführt sein.

In einer bevorzugten Ausführungsform des erfindungsgemäßen Verfahrens ist ein weiterer Schritt vorgesehen, der ein Autorisieren und/oder ein Beeinflussen der Baugruppe, deren Vertrauenswürdigkeit geprüft wird, umfasst. Dabei wird Einfluss genommen auf die Verwendung der Baugruppe in Abhängigkeit der Bewertung. Beispielsweise kann ein Reset der Baugruppe ausgeführt werden, so dass die Baugruppe bzw. ihre CPU neu bootet. Möglich ist es auch, einzelne oder alle Komponenten zu sperren, bei einer negativen Bewertung. Eine positive Bewertung der Vertrauenswürdigkeit kann Voraussetzung für eine Freigabe einzelner Komponenten, Bereiche oder Elemente der Baugruppe sein. Ebenso kann ein auf der Baugruppe ablaufender Prozess beeinflusst, etwa abgebrochen, oder autorisiert werden. Möglich sind Verzweigungen innerhalb eines Prozesses oder Programms.

Vorzugsweise ist der Ursprungsnachweis oder jedenfalls ein Teil davon in dem Secure-Element verschlüsselt gespeichert. Bevorzugt ist der Nachweis in einem separaten Speicher, bevorzugt einem geschützten Speicher, etwa einem Secure-Speicher, hinterlegt. Dieser ist bevorzugt von dem Record-Speicher getrennt. Für den Secure-Speicher und/oder den Record-Speicher können Zugriffsbeschränkungen bestehen; der Secure-Speicher kann z.B. nur von dem Security Prozessor ausgelesen werden. Ein Rechtemanagement kann vorgesehen sein, dass dem Secure-Element besondere Rechte für den Speicher zuweist. Das Rechtemanagement kann Schreibrechte nur für den Produktionsprozess und optional auch für eine Inbetriebnahme vorsehen. Es kann optional die gespeicherten Elemente mit einem Hinweis oder Parameter zum Zeitpunkt und/oder zum Prozessschritt in der Herstellung oder Inbetriebnahme versehen.

In einer bevorzugten Ausführungsform der Erfindung kann der Ursprungsnachweis ein Ursprungszertifikat umfassen. Beispielsweise kann das Zertifikat bevorzugt ein Schlüsselzertifikat sein, das bevorzugt mehrere Teile umfasst, von denen wenigstens ein Zertifikatsteil verschlüsselt sein kann. Bevorzugt umfasst das Schlüsselzertifikat einen Public-Key und einen Private-Key, der bevorzugt besonders geschützt oder verschlüsselt ist.

Bevorzugt umfasst das Überprüfen des Ursprungsnachweises zum Echtheitsnachweis des Secure-Elements zunächst den Schritt des Auslesens des Public-Keys des Secure-Elements, bevorzugt aus dem Secure-Speicher. Bevorzugt erfolgt ein autorisiertes Auslesen. Falls der Public-Key verschlüsselt in dem Secure-Element vorliegt, könnte ein optionales Entschlüsseln des Public-Keys erfolgen. Ein Verfahrensschritt sieht eine Prüfung vor, ob der Private-Key, der zu dem ausgelesenen Public-Key gehört, in dem Secure-Element vorhanden ist. Mit anderen Worten wird geprüft, ob das Schlüsselpaar aus Private-Key und Public-Key zusammenpasst. Bevorzugt wird geprüft, ob der passende Private-Key in dem Secure-Speicher gespeichert ist.

Ist der Ursprungsnachweis bevorzugt ein Schlüsselzertifikat mit einem Private-Key und einem Public-Key, so wird bevorzugt das Vorhandensein des Private-Keys in dem Secure-Element mittels weiterer Schritte geprüft. Zunächst wird ein wenigstens teils beliebiger Datenwert erzeugt, z.B. ein Zufallswert. Bevorzugt hat der Datenwert einen zufälligen Teil und vorgegebenen Teil (z.B. das aktuelle Datum oder eine beliebige fortlaufende Zahl). Dieser wird an das Secure-Element gesendet und dort mit dem Private-Key verschlüsselt zu einem Ergebniswert. Der Ergebniswert wird nach Ausgabe aus dem Secure-Element mit dem Public-Key entschlüsselt. In einem weiteren Schritt wird der Ergebniswert abhängig von dem zuvor erzeugten Datenwert (Zufallswert) überprüft. Dabei erfolgt ein Vergleich von Ergebniswert und Datenwert. Hier wird bevorzugt ein 100% Abgleich durchgeführt.

In einer bevorzugten Ausführungsform wird das erfindungsgemäße Verfahren während des Prozesses einer Baugruppe ausgeführt. Dazu kann während des Boot-Prozesses an einigen Stellen des Boot-Vorgangs vorgesehen sein, dass dieses Verfahren angestoßen wird. Teile des Verfahrens können dabei von dem Hauptprozessor der Baugruppe bzw. der Verarbeitungseinheit der Baugruppe initiiert und gesteuert werden. Teile des Verfahrens können von der CPU bzw. Verarbeitungseinheit ausgeführt werden. Der Prozessor oder die CPU der Baugruppe rufen dann das Secure-Element auf, um die dort ablaufenden Verfahrensschritte ausführen zu lassen.

Bevorzugt wird der Boot-Prozess der Baugruppe oder der Boot-Prozess von Baugruppenkomponenten beeinflusst. Hierbei wird in Abhängigkeit von dem ausgeführten Verfahren und dem Ergebnis der Überprüfung des Vertrauenskriteriums der Boot-Prozess verändert oder angepasst. Einzelne Komponenten der Baugruppe können gesperrt oder initiiert werden. Der Boot-Prozess kann so abgeändert werden, dass manche Baugruppen oder Komponenten nur dann aufgerufen oder gebootet werden, wenn in einem vorhergehenden Schritt die Vertrauenswürdigkeit der bisherigen Komponenten nachgewiesen wurde. Es können auch Softwarelizenzen gesperrt oder nicht freigegeben werden, die im weiteren Bootprozess benötigt werden könnten.

In einer bevorzugten Ausführungsform werden einzelne Schritte des erfindungsgemäßen Verfahrens, wie beispielsweise die Überprüfung von Ist-Zustandswerten und Soll-Zustandswerten, für einzelne Komponenten der Baugruppe oder Hardware-Komponenten der Baugruppe durchgeführt und das Vertrauenskriterium für diese Komponente ermittelt. Das Verfahren wird bevorzugt dann nochmals durchlaufen, jedoch für die nächste Komponente der Baugruppe. Die Steuerung und Auswahl der Komponenten kann von einem Boot-Prozess der Baugruppe initiiert und gesteuert werden. Dies kann in Abhängigkeit der Überprüfung der Vertrauenswürdigkeit von anderen Baugruppen oder Komponenten stattfinden. Vorzugsweise sind hierzu in dem Record-Speicher des Secure-Elements mehrere Einträge abgespeichert, also mehrere Soll-Zustandswerte, wobei bevorzugt für jede Baugruppe bzw. für jede Hardware-Komponente einer Baugruppe ein eigener Soll-Zustandswert gespeichert und hinterlegt ist. Die entsprechenden Ist-Zustandswerte der einzelnen Komponenten werden entweder von der CPU der Baugruppe, einem anderen Prozessor einer Komponente der Baugruppe oder von dem Secure-Element angeregt, initiiert und/oder gesteuert.

Eine ebenfalls bevorzugte Ausführungsform des erfindungsgemäßen Verfahrens sieht vor, dass das Verfahren während des Boot-Prozesses ausführbar ist. An entsprechenden Stellen des Boot-Prozesses, die dazu vorgesehen sind, wird das erfindungsgemäße Verfahren aufgerufen. Der Boot-Prozess verzweigt also zu dem erfindungsgemäßen Verfahren. Bevorzugt wird der Boot-Prozess von dem erfindungsgemäßen Verfahren beeinflusst. Mit anderen Worten ist der Boot-Prozess von den Ergebnissen, die das Verfahren liefert, abhängig. Besonders bevorzugt kann die Abfolge des Boot-Prozesses verändert werden. Beispielsweise kann in Abhängigkeit des ermittelten Vertrauenskriteriums einer Komponente der Baugruppe eine andere Reihenfolge oder andere Teile des Boot-Prozesses ausgeführt werden.

In einer bevorzugten Ausführungsform des erfindungsgemäßen Verfahrens ist in dem Record-Speicher ein Element zum Nachweis der vertrauenswürdigen Produktion der Baugruppe in Form eines Soll-Zustandswerts der Baugruppe gespeichert. Bevorzugt ist in dem Record-Speicher wenigstens ein Element zum Nachweis der vertrauenswürdigen Produktion einer Komponente in Form eines Soll-Zustandswerts gespeichert. Die Elemente bzw. Soll-Zustandswerte umfassen Informationen der Herstellung oder der Verarbeitung der Baugruppe. Sie können in Form eines Datensatzes vorliegen. Beispielsweise können ein Produktionsort, eine Produktionszeit oder andere produktionsspezifische Parameter in dem Element gespeichert sein. Das Element entspricht dem Soll-Zustandswert. Denkbar sind auch Informationen über eine bestimmte Konfiguration in der Produktion der Baugruppe, beispielsweise eine Reihenfolge, in der unterschiedliche Komponenten der Baugruppe montiert wurden, oder mit welchen Geräten die Produktion erfolgte. Bevorzugt sind die Elemente bzw. Soll-Zustandswerte miteinander verknüpft. Besonders bevorzugt sind sie in Form einer Kette aneinandergereiht und verknüpft, bevorzugt an deren Ende angefügt. Die in dem Record-Speicher hinterlegten Soll-Zustandswerte entsprechen dann einer Record-Chain, die eine digitale Identität der elektronischen Baugruppe bildet und somit zur Vertrauenswürdigkeit der Baugruppe beiträgt.

Eine besondere Ausführungsform des Verfahrens oder des Secure-Elements kann vorsehen, dass auf Basis einer erfolgten Überprüfung der Vertrauenswürdigkeit der Baugruppe oder der Vertrauenswürdigkeit einer Komponente der Baugruppe ein neues Element für den Record-Speicher erzeugt wird. Dieses Element wird dann in den Record-Speicher gespeichert, vorzugsweise mit einer Verlinkung zu bestehenden Elementen bzw. Einträgen des Record-Speichers. Neue Elemente werden also mit bereits bestehenden Elementen verknüpft. Besonders bevorzugt erfolgt diese Verknüpfung ebenfalls in Form einer Kette, beispielsweise in Form einer Record-Chain. Bevorzugt werden die neuen Elemente an das Ende der Kette angefügt, wobei besonders bevorzugt keine Elemente zwischen bestehende Elemente eingefügt werden können. Es ist denkbar, dass neue Elemente in Form eines Abzweigs an bestehende Elemente angefügt werden.

Vorzugsweise umfasst der Record-Speicher folglich nicht nur Soll-Zustandswerte, sondern auch weitere Elemente, die während der Überprüfung der Vertrauenswürdigkeit der Baugruppe oder einer Komponente der Baugruppe hinzugefügt werden können. Auf diese Weise lässt sich auch zu einem späteren Zeitpunkt noch nachweisen, dass die Vertrauenswürdigkeit der Baugruppe zu einem vorherigen, also in der Vergangenheit liegenden Zeitpunkt bestanden hat. Somit umfasst der Record-Speicher nicht nur Einträge (Records), die während der Produktion erzeugt wurden, sondern bevorzugt auch Einträge, die zu einem späteren Zeitpunkt erzeugt wurden. Neben Einträgen, die sich aus der Überprüfung der Vertrauenswürdigkeit im Betrieb der Baugruppe ergeben, können auch Einträge während der ersten Inbetriebnahme der Baugruppe erzeugt werden.

Früher erzeugte Einträge oder Elemente in dem Record-Speicher des Secure-Elements werden dann den Soll-Zustandswerten gleichgesetzt und im Rahmen dieser Erfindung auch als Soll-Zustandswert bezeichnet.

Durch das Fortschreiben der Record-Chain oder Verknüpfungskette in dem Record-Speicher werden Records of Trust fortgeschrieben, deren erstes Element bevorzugt jedoch der Ursprungsnachweis, also der Nachweis der Echtheit, des Secure-Elements ist. Dies hat den Vorteil, dass zu jedem Zeitpunkt während des Betriebs einer Baugruppe nachvollziehbar ist, wann und welche vertrauenswürdigen Komponenten und Bauteile verbaut wurden und wann eine Vertrauenswürdigkeit während der Inbetriebnahme und/oder während des Betriebs bestand. Vorzugsweise kann sich die Vertrauenswürdigkeit nicht nur auf Komponenten der Baugruppe, sondern auch auf installierte und implementierte Firmware oder Software für einzelne Komponenten der Baugruppe erstrecken.

In einer bevorzugten Ausführungsform des erfindungsgemäßen Verfahrens umfassen die Soll-Zustandswerte mehrere Merkmale der Baugruppe oder mehrere Merkmale von Komponenten. Bevorzugt können die Merkmale beispielsweise im einfachsten Fall eine Seriennummer, ein Produktionsdatum, eine Produktionscharge, eine Baugruppe oder Ähnliches sein. Darüber hinaus können Spannungs- oder Stromwerte, spezifische Taktfrequenzen oder Taktraten, Software-Versionsstände zu bestimmten Zeitpunkten, Produktionsstätten oder -orte oder -daten, Wartungs- oder Reparaturinformationen oder Ähnliches sein. Beispielsweise könnte ein Merkmal auch ein maximaler Strombedarf beim Hochfahren der Baugruppe oder in einem bestimmten Arbeitszustand sein. Die hier gemachte Aufzählung der Merkmale ist nicht abschließend zu verstehen. Andere Merkmale sind ebenfalls denkbar.

In einer bevorzugten Ausführungsform des Secure-Elements können die Soll-Zustandswerte in dem Record-Speicher kryptografisch gesichert sein, beispielsweise können sie verschlüsselt sein. Vorzugsweise sind mehrere Soll-Zustandswerte oder mehrere Einträge in dem Record-Speicher aneinandergereiht, wobei besonders bevorzugt die Aneinanderreihung oder Verkettung in einer festgelegten Reihenfolge erfolgen muss. Vorzugsweise beginnt die Reihe der Einträge mit einem Link oder Hinweis auf die Echtheit bzw. den Ursprungsnachweis des Secure-Elements. Dabei kann der Link oder ein Repräsentationswert für den Link oder ein Repräsentationswert für den Echtheitsnachweis des Secure-Elements in dem Record-Speicher abgelegt sein, bevorzugt verschlüsselt. Dieser kann vorzugsweise der erste Eintrag in den Records of Trust bzw. der Reihe der im Record-Speicher abgespeicherten Elemente oder Zustandswerte sein. Bei der Aneinanderreihung von mehreren Soll-Zustandswerten in einer festgelegten Reihenfolge umfasst der Begriff "Soll-Zustandswert" auch Werte oder Einträge in dem Record-Speicher, die nicht während der Produktion erzeugt wurden und produktionsspezifische Daten oder Parameter umfassen. Vielmehr können auch spezifische Werte, die während der Inbetriebnahme der Baugruppe erzeugt wurden, in Form von Soll-Zustandswerten abgespeichert sein. Auch eine nachfolgende Vertrauenswürdigkeitsprüfung während des Betriebs kann in Form eines "Soll-Zustandswerts" in dem Record-Speicher bevorzugt hinterlegt sein.

Eine besondere Ausführungsform des Secure-Elements sieht vor, dass zum Nachweis der Vertrauenswürdigkeit eine gewichtete Bewertung des Ist-Zustandswerts und des Soll-Zustandswerts ausgeführt wird. Die Ist-Zustandswerte und Soll-Zustandswerte können Werte der Baugruppe oder von Komponenten der Baugruppe sein. Die Soll-Zustandswerte können jeweils nicht nur Produktionsdaten, sondern auch Daten von früheren Überprüfungen oder einer Inbetriebnahme (Erstinbetriebnahme) umfassen. Eine gewichtete Bewertung kann vorsehen, dass die Vertrauenswürdigkeit einzelner Komponenten geringer sein kann und nur für spezielle oder besondere Komponenten eine hohe Bewertung erfolgen muss. Gleiches gilt für die Bewertung der Vertrauenswürdigkeit der Baugruppe. Hier kann unterschieden werden zwischen einem Vergleich oder Abgleich zwischen aktuellen Ist-Zustandswerten und Soll-Zustandswerten während der Produktion bzw. zu Soll-Zustandswerten von früheren Überprüfungen, die mit einer geringeren Bewertung einfließen können. Die Ausführung der Bewertung der Zustandswerte kann in dem Secure-Element selbst erfolgen. Ebenfalls bevorzugt kann die Bewertung von anderen Komponenten der Baugruppe durchgeführt werden.

In einer bevorzugten Ausführungsform weist das Secure-Element eine Schnittstelle auf, um Daten, Einträge des Secure-Speichers und/oder des Record-Speichers, Zwischenergebnisse oder Momentanwerte mit externen Komponenten, also Komponenten auf der Baugruppe oder Komponenten außerhalb der Baugruppe für eine Verarbeitung austauschen zu können. Bevorzugt wird hierdurch die Möglichkeit gegeben, wenigstens einen Prozessschritt des erfindungsgemäßen Verfahrens zum Nachweis der Vertrauenswürdigkeit an eine Komponente der Baugruppe auszulagern. Besonders bevorzugt sind die mit der Komponente ausgetauschten Daten verschlüsselt und authentisch. In einer besonders bevorzugten Ausführungsform erfolgt eine Kommunikation über die Schnittstelle mit der Komponente nur, wenn die Komponente eine Secure Engine aufweist, die in einem geschützten Bereich in der Komponente Sicherheitsfunktionen ausführen kann. Die Secure Engine ist bevorzugt eine (Co-)Prozessoreinheit, die von außen nicht ohne Weiteres zugänglich ist und/oder deren Programm, das von der Secure Engine verarbeitet wird, besonders geschützt ist. Als Sicherheitsfunktionen werden in diesem Zusammenhang verstanden, dass das Secure-Element manipulationssicher (tamper-proof) entwickelt und produziert wurde und gegen bekannte Angriffsmethoden geschützt ist. Weiterhin sollte der Sicherheitslevel des Secure-Elements jeweils dem aktuellen Stand der Technik entsprechen und eine Zertifizierung nach einem Standard, beispielsweise EAL besitzen.

Eine ebenfalls bevorzugte Ausführungsform des Secure-Elements sieht eine Schnittstelle vor, um Daten mit einer externen Komponente auszutauschen, die wenigstens durch Sicherheitsmerkmale gesichert ist. Die Komponente muss dabei keine Secure Engine im Sinne der Beschreibung für das Secure-Element aufweisen. Sicherheitsmerkmale in diesem Zusammenhang sind beispielsweise Datenintegrität, Datenauthentizität, Datenverschlüsselung oder auch Schutz eines Schlüssels vor Manipulation. Unter dem Begriff "durch Sicherheitsmerkmale gesicherte Komponente" wird eine Komponente verstanden, die beispielsweise einen kryptografischen Schlüssel oder eine einzigartige ID besitzt, die nicht ausgelesen werden kann, auch bevorzugt durch physikalische Gegebenheiten immer wieder erzeugt werden kann oder mit speziellen Verfahren obfuskiert vorhanden bzw. abgelegt ist.

Bevorzugt wird eine "Chain of Records"-Plattform, die basierend auf einem eingebetteten Vertrauensanker (Secure-Element) gleichermaßen eine vertrauenswürdige Produktionskette als auch eine sichere Inbetriebnahme von Halbleiterkomponenten und Baugruppen einer spezifischen Hardware-Plattform (Device) unterstützt, im Rahmen der Erfindung eingesetzt und verwendet. Die Vertrauenswürdigkeit der Hardware-Plattform oder elektronischen Baugruppe besteht aus einem Secure-Element (SE, sogenannten Vertrauensanker oder Root of Trust) und weiteren, nicht klonbaren Identitätsmerkmalen. Verwendet wird bevorzugt auch ein Backendsystem, welches das Ausrollen der notwendigen Sicherheitsdienste während der Fertigung bzw. Produktion sowie weiterer Dienste im Lifecycle Management eines Produktes unterstützen kann. Dies kann eine übergeordnete Instanz sein, die Berechtigungen an bestimmte Hersteller vergibt, welche vertrauenswürdige Komponenten herstellen und verbauen bzw. eine vertrauenswürdige Baugruppe produzieren. Backendsysteme zur Unterstützung und zur Erhaltung (Maintenance) der Records of Trust können bevorzugt z.B. remote Certificate Authorities (CA) und Zertifikatsmanagementsystemen sowie Autorisierungssysteme für Rechtemanagement sein.

Aufbauend auf einer zuvor nachweislich vertrauenswürdig gefertigten Hardware-Plattform (z.B. ein Embedded System), ausgestattet mit einem, bevorzugt eingebetteten Secure-Element (Vertrauensanker SE) und weiteren, bevorzugt komplementären nicht klonbaren Identitäten von Halbleiterkomponenten oder Hardwarekomponenten, umfasst die Erfindung auch Möglichkeiten einer vertrauenswürdigen Verzahnung von Hard- und Software während der ersten Inbetriebnahme.

Dazu gehört sowohl die Inbetriebnahme konfigurierbarer Logik in einem FPGA als auch das sichere Booten oder Bootstrapping von Firm- oder Software (OS) mittels durchgängiger Anwendung der "Chain of Records"-Plattform. Dies kann für alle sicherheitskritischen Prozesse gelten, die eine Baugruppe mit Hardware-Fertigungsnachweis bis zur Inbetriebnahme zu durchlaufen hat. Am Ende einer Inbetriebnahme können die Nachweise als Inbetriebnahme-Records zusammen mit den Fertigungsnachweisen lückenlos und fälschungssicher in einem eingebetteten Secure-Element (Vertrauensanker) (zusammengefasst) gespeichert werden. In späteren Phasen des Product Lifecycle Management können das Secure-Element (SE) und die Records of Trust direkt und jederzeit zu Zwecken von digitalen Ursprungs- und Integritätsnachweisen abgefragt werden. Sie repräsentieren somit eine digitale Identität der elektronischen Baugruppe bzw. eines elektronischen Geräts.

Die Unterstützung der Integrität von Open Source Betriebssystemen mittels des Secure-Elements ist eine weitere Einsatzmöglichkeit. In Fortführung und Erhaltung der Vertrauenswürdigkeit aller sicherheitsrelevanten Prozesse (Security relevant), wie etwa in der Netzwerk- und Systemintegration, dient das Secure-Element in der Funktion als ständiger, fortlaufend erweiterbarer Vertrauensanker.

Mechanismen oder Methoden, die den Schutz der Vertrauenswürdigkeit bereits ab dem Zeitpunkt der ersten Inbetriebnahme gewährleisten können, sind ein bevorzugtes Anwendungsgebiet der Erfindung. Darunter kann auch der Erhalt der Systemintegrität fallen, wie etwa der Schutz von geistigem Eigentum, der sich sowohl auf partiell rekonfigurierbare Hardware-Logik als auch auf schützenwerte Firmware und Software als Träger von geistigem Eigentum erstreckt kann.

Der erfinderische Ansatz zur Schaffung von Vertrauenswürdigkeit einer elektronischen Hardwarekomponente oder Baugruppe beruht auf der Verwendung von verketteten Records of Trust über den gesamten Produktlebenszyklus. Die Records of Trust sind in dem Secure-Element gespeichert, bevorzugt in dem Record-Speicher, und sie sind zu jeder Zeit aus dem Secure-Element auslesbar. Somit ist die Baugruppe Vorort kryptografisch überprüfbar auf Echtheit und auf Vertrauenswürdigkeit.

Bausteine und Bestandteile der Chain of Records sind zum einen hardwarespezifische Merkmale, die bevorzugt als Soll-Zustandswert vorhanden sind, besonders bevorzugt zu einem "Hardware-Fingerprint" zusammengefasst, ein einzigartiges Merkmal einer speziellen Hardwareeinheit bzw. elektronischen Baugruppe darstellen. Zum anderen könnte eine Steueranweisung für einen mehrstufigen Verified Boot Prozess ein Bestandteil der Records of Trust sein. Ein Hersteller könnte in der Lage sein, einen solchen Hardware-Fingerprint, z.B. als neues Element, neuen Eintrag oder als neuen Soll-Zustandswert, in dem Record-Speicher des Secure-Elements zu erstellen. Ein derartiger Eintrag könnte eine Prüfung des Fingerprints auslösen, wobei das Prüfergebnis in Verbindung mit dem Secure Element den weiteren Bootprozess beeinflussen bzw. unterbrechen kann. Hier kann sowohl eine Prüfung auf Gleichheit oder Ähnlichkeit bzgl. einer Referenzbaugruppe erfolgen, als auch eine Prüfung auf Einzigartigkeit.

Die Einbettung des Hardware-Fingerprints in Verbindung mit einem mehrstufigen Verified Boot Prozess in die bereits aus der Produktion der Komponenten vorhandenen Records of Trust innerhalb des Fertigungsprozesses schafft zusammen mit einer Erweiterung der Vertrauenswürdigkeit (Trusts) auf die Betriebsphase in Form von geschützter Firm- und Software ein völlig neuartiges, ganzheitliches Nachweissystem für die Vertrauenswürdigkeit von elektronischen Systemen und Baugruppen.

Um eine vertrauenswürdige Inbetriebnahme einer elektronischen Baugruppe (HW-Plattform) zu gewährleisten und deren integren Betriebsbereitschaft sicherzustellen, sind bevorzugt sukzessive auf Vertrauenswürdigkeit geprüfte einzelne Prozess- oder Verfahrensschritte erforderlich. Die Erfindung sieht vor, dass in dem Secure-Element (Vertrauensanker SE), wie oben skizziert, bereits eine digital signierte Produktionshistorie, gekennzeichnet durch Speicherung produktionsrelevanter Prozessschritte, Daten, Seriennummern oder QS-Nachweise, bevorzugt in Form eines oder mehrerer Records (Elemente oder Einträge) in dem Record-Speicher, vorhanden ist. Deren Überprüfung kann im laufenden Inbetriebnahmeprozess oder in der Betriebsphase, bevorzugt mittels kryptografischer Funktionen des Secure-Elements, erfolgen, aber auch außerhalb des Secure-Elements. Beipielsweise könnte die Erstellung eines Fingerprints auch in einem speziellen Bootlayer eines FPGAs erfolgen. Dieser kann dann verschlüsselt oder über eine geschützte Verbindung an das Secure-Elementübertragen und geprüft werden. Bei der Initialisierung der Hardware-Plattform oder Baugruppe werden ID-Merkmale, die auf Hardware-Fingerprints einzelner Komponenten beruhen können, überprüft und je nach Ergebnis für die Autorisierung nachfolgender Schritte im Hardware-Initialisierungs- und/oder Bootprozess verwendet. Gleiche Vorgehensweise lässt sich auch entsprechend auf die Anwendung von Fingerprints von Hardware-Logik, Firmware (FW) und Software (SW) übertragen. Voraussetzung für den hier vorgeschlagenen Prozess ist, dass im Vorfeld einer weitgehend vollautomatisierten Elektronikfertigung zwecks Erfassung von hardwarebezogen Prüfparametern sogenannte Produktionsrecords oder P-Records gespeichert werden, bevorzugt in dem Record-Speicher des Secure-Elements. Diese P-Records dienen als Soll-Zustandswerte. Sind Komponentenmerkmale in Form von elektrischen oder anderweitigen Kenngrößen vorhanden, kann Vertrauenswürdigkeit auch mittels Entscheidungskriterien lokal implementierter KI-Prozeduren (Künstliche Intelligenz) nachweisbar hergeleitet werden. Im Einzelnen werden beispielhaft das Vorgehen und die erforderlichen Maßnahmen und Komponenten erläutert:

In einer bevorzugten Ausführungsform kann mittels intelligenter Funktionen im Secure-Element eine digitale Identität auf Ebene der Hardware-Plattform geschaffen werden, bevorzugt durch die Ausgestaltung von Hardware-Fingerprinting-Methoden, beispielsweise mittels Integration von UID-Halbleitertechnologien, z.B. unter Anwendung von Physically Obfuscated Keys (POK), sowie durch deren Bindung an Unique ID-Merkmale, also eindeutige Identitätsmerkmale einzelner Komponenten oder der Baugruppe. Diese zum Teil ressourcenbeschränkten kosteneffizienten Halbleiterschaltungen mit begrenzten kryptographischen Funktionen können über einen Computer Bus eine eindeutige, kryptographische Authentifizierung des POKs durch das SE ermöglichen und stellt ein fälschungssicheres Merkmal einer Halbleiterkomponente dar. Die Echtheit lässt sich Vorort, ohne Aufbau einer externen Netzwerkverbindung, mit Hilfe des Secure-Elements und der dort gespeicherten Records überprüfen.

Die Herstellung der Records of Trust und das Zertifikatsmanagement stehen ganz zu Beginn der Fertigungskette mit der Erstellung der Records of Trust. Der Ursprungsnachweis des Secure-Elements, bevorzugt in Form eines Schlüsselzertifikats, ist bevorzugt ein weiterer, wichtiger Teil zur Herstellung von Vertrauenswürdigkeit.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Zeichnung einer Baugruppe, deren Vertrauenswürdigkeit nachgewiesen werden soll;
- Figur 2: ein Secure-Element zum Nachweis der Vertrauenswürdigkeit einer Baugruppe;
- Figur 3: ein Beispiel für den Zusammenhang von Herstellungsprozess und Soll-Zustandswert;
- Figur 4: ein Secure-Element im Zusammenhang mit dem Herstellungsprozess;
- Figur 5: ein beispielhafter Aufbau eines Records aus einem Record-Speicher des Secure-Elements;
- Figur 6: eine schematische Darstellung eines Boot-Prozesses einer Baugruppe mit teilweisem Nachweis der Vertrauenswürdigkeit;
- Figur 7: eine schematische Darstellung eines weiteren Teils eines Boot-Prozesses mit Nachweis der Vertrauenswürdigkeit;
- Figur 8: eine andere schematische Darstellung eines weiteren Boot-Prozesses mit einem Secure-Element; und
- Figur 9: eine schematische Darstellung des erfindungsgemäßen Verfahrens.

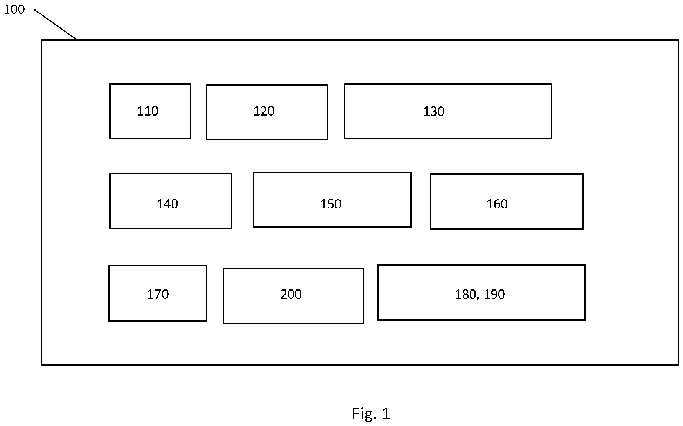

Figur 1 zeigt eine elektronische Baugruppe 100 mit typischen Hardwarekomponenten und Bauteilen. Die Baugruppe 100 umfasst eine Verarbeitungseinheit oder CPU 110, einen Operational Memory 120, in dem Daten für die Verarbeitung zwischengespeichert werden können, einen non-volatile Memory 130 (nicht flüchtigen Speicher), in dem Werte abgelegt werden können, die auch nach dem Ausschalten der Baugruppe noch in dem Speicher vorhanden sind. Die Baugruppe 100 umfasst weiterhin ein Computerbusinterface 140, optional einen Logikbaustein, z.B. ein reconfigurable logical gate array, bevorzugt einen FPGA (field programmable gate array) 150, sowie einen Kommunikationscontroller 160. Weiterhin kann die Baugruppe 100 eine UID-Einheit und eine PUF-Einheit 170 aufweisen. Daneben kann die Baugruppe weitere Bauteile 180 umfassen, wie beispielsweise einen Digital-Analog-Wandler 190 oder sonstige typische Verarbeitungsbauteile, beispielsweise Sensoren.

Ein zentraler Bestandteil der elektronischen Baugruppe 100 ist ein Secure-Element 200, das für den Nachweis der Vertrauenswürdigkeit der Baugruppe 100 verwendet wird. Das Secure-Element 200 ist dabei das zentrale Element, in dem Sicherheitsmerkmale abgelegt sind und das eine Überprüfung von hinterlegten Daten bzw. Merkmale mit aktuellen Daten bzw. Merkmalen der Baugruppe 100 in einem gesicherten Bereich durchführt, der von außen nicht oder nur beschränkt zugänglich ist. Zugriff auf das Secure-Element 200 erfolgt teilweise nur nach Autorisierung und von autorisierten Einheiten oder Programmen.

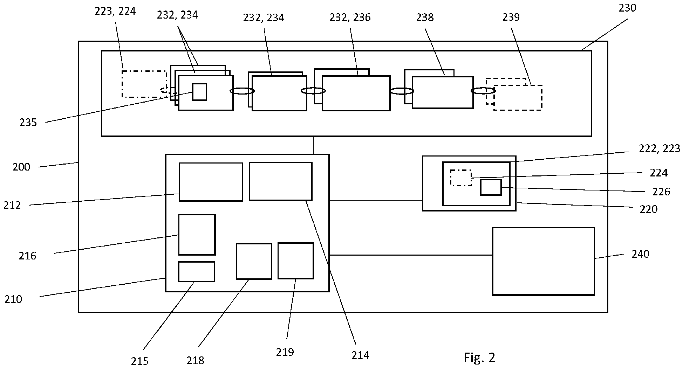

Figur 2 zeigt das Secure-Element 200 im Detail. Es umfasst eine Steuereinheit 210, einen Secure-Speicher 220, in dem ein Ursprungsnachweis 222 abgelegt ist, einen Record-Speicher 230 mit einem oder bevorzugt mehreren Records 232, sowie ein Kommunikationsinterface 240 zum Datenaustausch mit Bauteilen der Baugruppe 100, insbesondere zum Datenaustausch mit der CPU 110 oder mit dem FPGA 150.

Die Steuereinheit 210 umfasst eine Prozessoreinheit 212, die einen optionalen (nicht gezeigten) Co-Prozessor umfassen kann, und eine Boot-Prozess-Engine 214 sowie bevorzugt auch eine optionale KI-Engine 216 (Künstliche-Intelligenz-Einheit, AI-Engine). Die Steuereinheit 210 kann bevorzugt einen Zufallszahlengenerator 215 (Random Number Generator, RNG) umfassen, um Zufallszahlen oder Quasi-Zufallszahlen zu erzeugen, und optional einen Zeitgenerator oder eine Clock. Die Steuereinheit 210 hat einen Ist-Speicher 218 und einen Soll-Speicher 219, wobei die beiden flüchtigen Speicher 218, 219 zur Zwischenspeicherung von Daten, Datensätzen, Zustandswerten oder Records ausgebildet sind. Der Prozessor 212 steuert die Verarbeitungsprozesse und das Verfahren zum Nachweis der Vertrauenswürdigkeit der Baugruppe 100, gegebenenfalls mit Hilfe des Co-Prozessors und/oder der KI-Engine 216. Wird dieser Nachweis beispielsweise beim Booten der Baugruppe 100 durchgeführt, so kann zusätzlich mittels der Boot-Prozess-Engine 214 eine Bootkontrolle erfolgen bzw. bootspezifische Parameter aus dem Record-Speicher 230 ausgelesen werden.

In dem Secure-Speicher 220 kann der Ursprungsnachweis 222 in Form eines Ursprungszertifikats 223 vorhanden sein, z.B. als Schlüsselzertifikat. Das Ursprungszertifikat 223 kann einen Public-Key 224 und einen Private-Key 226 umfassen, wobei bevorzugt wenigstens der Private-Key 226 eines Ursprungsnachweises 222 des Secure-Elements 200 in dem Speicher abgelegt ist.

Der Record-Speicher 230 umfasst bevorzugt mehrere Records 232, von denen wenigstens ein Record 232 ein Produktions-Record oder P-Record 234 ist, in dem während der Herstellung der Baugruppe 100 spezifische Daten eines Soll-Zustands, so genannte Soll-Zustandswerte 235, autorisiert vom Hersteller gespeichert werden. Vorzugsweise sind die P-Records 234 unveränderbar. Alternativ können auch ein oder mehrere Records 232 nicht nur produktionsspezifische Merkmale in Form von Soll-Zustandswerten gespeichert sein, sondern spezifische Werte bei der Erstinbetriebnahme umfassen. In diesen IB-Records 236 können beispielsweise Strom- oder Spannungsverläufe beim Einschalten oder Booten der Baugruppe 100 hinterlegt sein.

Daneben können die Records 232 auch B-Records 238 sein, in denen Bootkonfigurationen oder Bootprozessabfolgen hinterlegt sein können. Schließlich ist es möglich, dass ein oder mehrere Records 232 als BP-Records 239 ausgeführt sind, die Ergebnisse bevorzugt eines Bootprozesses im Verlauf der Verwendung der Baugruppe 100 umfassen. Diese BP-Records 239 können von der Boot-Prozess-Engine 214 während eines Bootvorgangs oder nach einem Bootvorgang der Baugruppe 100 in den Record-Speicher 230 geschrieben werden. Bevorzugt können zu Beginn des Record-Speicher 230 auch Teile des Ursprungsnachweis 222 liegen, bevorzugt das Ursprungszertifikat 223 und/oder der Public-Key 224. In diesem Fall ist das Ursprungszertifikat 223 nicht im Secure-Speicher abgelegt.

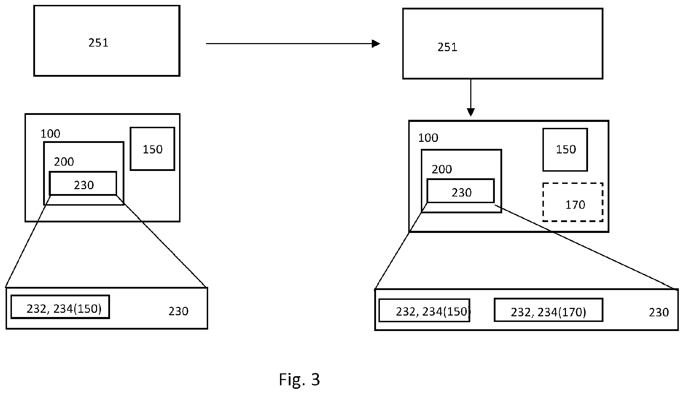

Figur 3 zeigt einen Teil eines autorisierten Herstellungsverfahrens, mit dem eine Chain of Records of Trust implementiert werden kann. Ein erster Hersteller 251 produziert eine elektronische Komponente, beispielsweise ein FPGA 150, das auf eine Baugruppe 100 montiert wird. Die Baugruppe 100 umfasst ein Secure-Element 200 mit einem Secure-Speicher 230, wie oben beschrieben.

Nachdem der Hersteller 251 in seinem Herstellungsprozess das vertrauenswürdig erzeugte FPGA 150 auf der Baugruppe 100 installiert hat, werden produktionsspezifische Prozessdaten und bevorzugt charakteristische Merkmalsdaten in dem Secure-Element 200 abgelegt. Hierbei werden Prozessdaten und Merkmale in Form von P-Records 234 in den Record-Speicher 230 geschrieben. Diese P-Records umfassen Soll-Zustandswerte 235, die den vertrauenswürdigen FPGA 150 charakterisieren, so wie er während der vertrauenswürdigen Produktion auf der Baugruppe 100 installiert worden ist. Die Soll-Zustandswerte 235 im P-Record 234 können eine Seriennummer, ein Produktionsdatum, ein Produktionsort, Bezeichnung und Seriennummer der Produktionsmaschine oder andere Daten umfassen. Hierzu gehören auch Strom- oder Spannungswerte, beispielsweise in einem Arbeitspunkt, Taktfrequenzen oder Ähnliches. Möglich ist auch, dass mehrere Zustandswerte zu einem Fingerprint zusammengeführt werden und dann der Fingerprint alternativ oder zusätzlich im P-Record 234 abgespeichert werden.

Im weiteren vertrauenswürdigen Herstellungsverfahren kann der gleiche Hersteller 251 oder ein weiterer Hersteller 252 ein weiteres Bauteil auf der Baugruppe 100 installieren. Dieses Bauteil kann beispielsweise eine UID-PUF-Einheit 170 oder ein Sensor sein. Die charakteristischen Werte der UID-Einheit oder des Sensors werden wiederum in dem Record-Speicher 230 des Secure-Elements 200 der Baugruppe 100 abgelegt. Dies geschieht erneut in Form eines Records 232. Auch während dieses Produktionsschritts werden die aktuellen Soll-Zustandswerte 235 als P-Record 234 gespeichert und charakterisieren somit das aktuell verbaute Bauteil. Vorzugsweise werden die neuen Records 232 an die bestehenden Records im Record-Speicher 230 angefügt und miteinander verkettet oder verlinkt. Beispielsweise ist es möglich, dass hierzu ein Hash-Wert des vorherigen Records 232 im nachfolgenden Record 232 des neuen Bauteils (UID-PUF-Einheit 170) abgelegt wird.

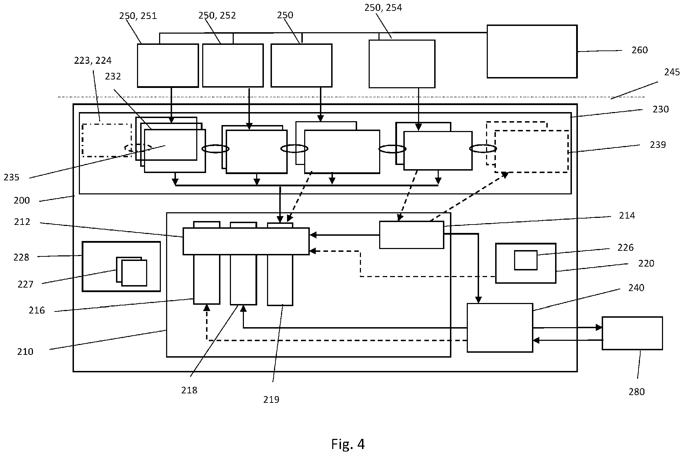

Figur 4 zeigt das Secure-Element 200 im Detail in Zusammenhang mit dem Herstellungsprozess. Oberhalb einer gestrichelten Linie 245 sind einzelne Hersteller 250 von einzelnen Hardware-Komponenten oder Bauteilen der Baugruppe 100 dargestellt. So kann beispielsweise ein Hersteller 251 einen P-Record 234 in den Record-Speicher 230 schreiben und abspeichern. Das Beschreiben des Record-Speichers erfolgt während des Herstellungsprozesses und ist autorisiert. Dazu kann vorgesehen sein, dass nur autorisierte Hersteller 250 eine Berechtigung zum Schreiben von Soll-Zustandswerten 235 in die Records 232 durchführen können, von einer übergeordneten Instanz 260 autorisiert sind, beispielsweise im Rahmen eines chain-of-trust-Systems. Die autorisierte Instanz 260 kann Teil eines chain-of-trust-collaboration-platform-Systems sein.

Ein Hersteller 250 kann mehrere Datensätze in einen P-Record 234 schreiben. Alternativ kann ein Hersteller auch mehrere P-Records 234 anlegen. Denkbar ist, dass beispielsweise ein erster Hersteller 251 in einem P-Record Daten eines FPGA 150 oder anderen gate arrays hinterlegt. Dies können beispielsweise die Seriennummer des FPGA 150, Produktionsdatum, Produktionsort, Hersteller, Taktfrequenz oder ähnliche Werte sein. Ein zweiter Hersteller 252 beschreibt einen weiteren P-Record 234 mit Soll-Zustandswerten 235. Dabei kann der zweite Hersteller 252 beispielsweise der Hersteller eines zweiten Bauteils 180 sein, beispielsweise des non-volatile Memory 130, beschreibt den zweiten Record 232 mit den Soll-Zustandswerten 235, die diesen Memory 130 charakterisieren. Auch hier können mehrere P-Records 234 angelegt werden. Alternativ können in einem Record auch mehrere Soll-Zustandswerte gespeichert sein. Die beiden P-Records 234, der vom Hersteller 251 beschrieben wurde, und 234, der vom Hersteller 252 beschrieben wurde, sind vorzugsweise miteinander verknüpft, besonders bevorzugt in Form einer Aneinanderreihung oder Kette. Auf diese Weise werden verkettete Records of Trust im Record-Speicher gebildet.

Am Ende des Herstellungsprozesses kann ein Hersteller 254 eine Erstinbetriebnahme der Baugruppe 100 durchführen und einen Inbetriebnahmeeintrag in Form eines IB-Records 236 in den Record-Speicher 230 schreiben. Der IB-Record 236 wird an die Kette der Records 232 angefügt. Hier können beispielsweise Bootsequenzen oder Konfigurationen des Hochfahrens gespeichert werden, die dann bevorzugt in der Boot-Prozess-Engine 214 der Steuereinheit 210 zur Verfügung gestellt und in dieser verarbeitet werden.

Der Record-Speicher 230 kann optional einen Ursprungsnachweis 222 oder Teile eines Ursprungsnachweises 222 des Secure-Element 200 umfassen. Beispielsweise kann am Anfang der verketteten Records ein öffentlicher Schlüssel (Public-Key 224) und ein Ursprungszertifikat 223 in Form eines Records 232 abgespeichert sein. Hierbei wird vorausgesetzt, dass der Ursprungsnachweis 222 in Form eines Public-Key 224 und eines Private-Key 226 hinterlegt ist. Der Private-Key 226 wird dabei im Secure-Speicher 220 abgespeichert und kann lediglich von der Prozessoreinheit 212 ausgelesen werden. Public-Key 224 und Private-Key 226 werden zur Überprüfung der Echtheit des Secure-Elements 200 verwendet. Dies erfolgt in der oben beschriebenen Weise.

Während des Bootprozesses der elektronischen Plattform kann über einen Datenkanal 280, der vorzugsweise gesichert ist, von der CPU 110 der Baugruppe 100 ein aktueller Status eines Bauteils an das Secure-Element 200 übermittelt werden. Beispielsweise kann bei der Überprüfung der Vertrauenswürdigkeit der non-volatile Memory 130 überprüft werden. Dazu werden spezifische Merkmale oder Daten aus der non-volatile Memory 130 von der CPU 110 ausgelesen und über den Datenkanal 280 an das Kommunikationsinterface 240 des Secure-Elements 200 übermittelt. Ein Ist-Zustandswert 233 wird in dem Ist-Speicher 218 zwischengespeichert. Der Prozessor 212 liest aus dem zugehörigen Record 232 bzw. dem P-Record 234 für den non-volatile Memory 130 die entsprechenden Werte aus und speichert sie in dem Soll-Speicher 219 zwischen. Die Zustandswerte werden mittels der Prozessoreinheit 212 überprüft, beispielsweise verglichen, um festzustellen, ob ein Vertrauenskriterium erfüllt ist. Dies könnte beispielsweise durch einen einfachen Soll-Istwert-Vergleich oder einen gewichteten und normierten Vergleich der Ist-Zustandswerte und der Soll-Zustandswerte erfolgen. Alternativ kann für den Überprüfungsprozess auch die KI-Engine 216 von dem Prozessor beauftragt werden, sodass ein Teil des Überprüfungsprozesses beispielsweise auf Basis von neuronalen Netzen oder anderen KI-Algorithmen in der KI-Engine 216 durchgeführt wird. Anstelle eines Vergleichs der Soll- und Ist-Werte können Fingerprints ausgewertet und in Beziehung gesetzt werden, wobei dann die Soll-Zustandswerte als Fingerprint in den Records 232 gespeichert sind. Ein Fingerprint ist eine intelligente Verknüpfung von mehreren Hardware-Merkmalen der elektronischen Baugruppe zu einem Gesamt-Zustandswert. Der Fingerprint als Ist-Zustandswert eines Bauteils 180 könnte auch außerhalb des Secure-Elements 200 erfasst werden, z.B. durch die CPU 110 oder das FPGA 150.

Zusätzlich kann vor der Verarbeitung der Zustandswerte überprüft werden, ob das Secure-Element 200 einen konkreten Ursprungsnachweis hat. Hierzu kann die Prozessoreinheit 212 des Secure-Element 200 aus dem Secure-Speicher 220 den Private-Key 226 ausgelesen. Mittels des Prozessors 212 wird der zugehörige Public-Key 224 ermittelt und dann mit dem im Record-Speicher 230 hinterlegten Public-Key 224 verglichen.

Nach erfolgreicher Bearbeitung der Zustandswerte und Bewertung, ob ein Entscheidungskriterium erfüllt ist, kann die Prozessoreinheit 212 über das Kommunikationsinterface 240 einen entsprechenden Befehl durch den Datenkanal 280 an die CPU 110 bzw. Bearbeitungseinheit der Baugruppe 100 übertragen. Alternativ kann die Prozessoreinheit 212 das Ergebnis der Entscheidung auf Vertrauenswürdigkeit an die Boot-Prozess-Engine 214 übermitteln. Diese kann bevorzugt einen BP-Record 239 in den Record-Speicher 230 schreiben und an die vorhandenen Records 232 in Form eines neuen Records 232 anfügen. In einem weiteren Schritt kann dann die Boot-Prozess-Engine 214 in Abhängigkeit der Überprüfung einen Boot-Sequenzbefehl an die CPU 110 der Baugruppe übermitteln. Auch dies erfolgt über das Kommunikationsinterface 240 und den bevorzugt sicheren Datenkanal 280. Auf diese Weise lässt sich beispielsweise der Bootprozess der Baugruppe 100 in Abhängigkeit der im Secure-Element 200 durchgeführten Überprüfung der Vertrauenswürdigkeit steuern, beeinflussen, ändern und gegebenenfalls sogar abbrechen. Zusätzlich kann das Secure-Element 200 bevorzugt Herstellerzertifikate 227 von einem oder mehreren Herstellern 250 umfassen, die bevorzugt in einem Zertifikatspeicher 228 gespeichert sind. Der Zertifikatspeicher 228 ist bevorzugt ein separater Speicher.

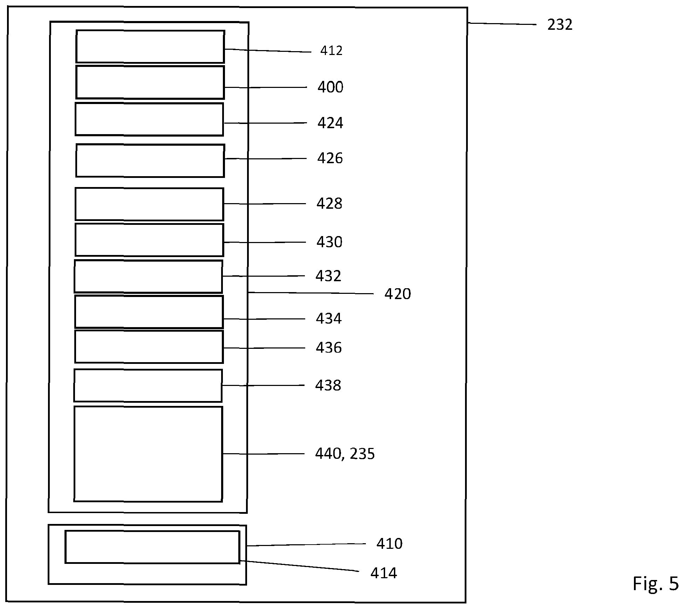

Figur 5 zeigt einen beispielhaften Aufbau eines Records 232. Ein Record 232 besteht aus einem Datensatz (Recorddaten) 420 und einer Signatur (Record-Signatur) 410. Über alle Elemente des Datensatzes 420 wird mit einem Algorithmus ein eindeutiger Wert gebildet. Bevorzugt wird hierzu eine Hash Funktion verwendet. Daraus ergibt sich dann ein Hashwert 422, der den Datensatz 420 eindeutig repräsentiert. Über den Hashwert 422 des Datensatzes 420 wird nachfolgend eine Signatur 414 gebildet, für die ein Herstellerzertifikat 227, bevorzugt in Form eines Private-Keys 226, des Erstellers des Records benötigt wird. Ersteller sind im Beispiel einzelne Hersteller 250,251. Der zum privaten Schlüssel 226 gehörende Public-Key 224 ist Teil des Herstellerzertifikats 227, das ebenfalls im Secure-Element 200 abgespeichert ist. Mit diesem Herstellerzertifikat 227 kann die Signatur 414 kryptografisch validiert werden. Somit ist sichergestellt, dass der Record 232 von dem Hersteller 250, der den Private-Key 226 des Herstellerzertifikats 227 besitzt, signiert wurde. Zur Identifikation dieses Herstellerzertifikats 227 enthält jeder Record 232 im Datensatz 420 eine Zertifikats-ID 430 (als Referenz-Zertifikat), die auch im Herstellerzertifikat 227 enthalten ist.

Eine mögliche Verkettung von Records 232 wird dadurch erreicht, dass über einen gesamten Record 232 ein Hashwert 422 gebildet wird, der besonders bevorzugt als Datenwert 412 (Hash-RID-1) in den nachfolgenden Record 232 eingeht. Zur Unterstützung dieses Verfahrens umfasst ein Record 232 im Datensatz 420 eine Record-ID 400, ein Wert, der besonders bevorzugt streng monton ansteigend ist.

Weitere optionale Elemente im Datensatz 420 eines Records 232 sind nachfolgend nicht abschließend aufgeführt.

Ein Element Typ 424 kennzeichnet unterschiedliche Record-Typen oder -arten, beispielsweise IB-Record 236, B-Record 238, BP-Record 239. Weitere Typen sind möglich. Optionen 426 sind beispielsweise ein Hinweis, dass die Prozess-daten 440 verschlüsselt sind, oder dass nur ein autorisierter Zugriff erfolgen kann. Das Element Ersteller 427 kann den Herstellernamen oder eine Abkürzung für den Hersteller 250 als Ergänzung zur Zertifikats-ID 430 umfassen. Produktname 432 bezeichnet den Namen einer elektronischen Baugruppe 100. Das Element Prozessschritt 434 ist eine Identifikation (ID) für eine genaue Bezeichnung eines spezifischen Prozessschritts.

Zeitstempel 436 umfasst Datum und Uhrzeit des durchgeführten Prozessschritts 434. Das Element Ergebnis 438 spezifiziert das Ergebnis genauer. Beispielsweise kann das Ergebnis "gut" oder "schlecht" sein oder anders genauer bezeichnet werden. Prozess-Daten 440 sind Daten abhängig vom Typ 424 und umfassen bevorzugt Daten wie Prozessparameter, Konfigurationsparameter, Soll-Zustandswerte 235, Ablauflisten eines vertrauenswürdigen Boot Prozesses oder ähnliche Daten.

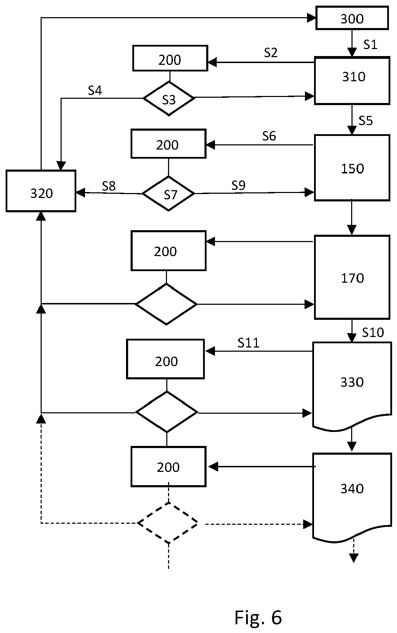

Figur 6 zeigt schematisch einen Teil eines Boot-Prozesses einer vertrauenswürdigen Baugruppe, währenddessen auch der Nachweis der Vertrauenswürdigkeit mithilfe eines Secure-Elements 200 geführt wird.

Nach einem Power On Reset (POR) bzw. Einschaltvorgang 300 führt die CPU 110 der Baugruppe 100 in einem Schritt S1 die Ausführung eines BIOS-Programms 310 aus. Nach der Initialisierung eines Computerbusses wird von dem BIOS 310 in einem Schritt S2 überprüft, ob ein Secure-Element 200 auf der Baugruppe 100 vorhanden ist. Hierzu wird die Echtheit des Secure-Elements durch Abfrage und Anwendung eines Ursprungsnachweises 222 im Secure-Element 200 verifiziert, bevorzugt durch die Überprüfung des Ursprungszertifikats 223 mit Public-Key 224 im Nachweis gegen die vertrauenswürdige Zertifikatskette zu einem bekannten Root-Zertifikat des Herstellersystems. Zusätzlich kann auch das Vorhandensein des zugehörigen Private-Key per Challenge-Response-Methode geprüft werden. In einem Schritt S3 wird geprüft, ob der Echtheitsnachweis von dem Secure-Element 200 erbracht worden ist. Schlägt dies fehl, verzweigt das BIOS-Programm in einem Schritt S4 zu einem Programmmodul (Unterroutine) 320, in dem Restriktionen wie beispielsweise ein Reset, also ein Power-Reset, durchgeführt werden. Alternativ könnte das Secure-Element 200 bei fehlgeschlagener Vertrauenswürdigkeit direkt einen Reset der Baugruppe auslösen.

Bei erfolgreicher Verifizierung wird der Ablauf des BIOS-Programms fortgesetzt, wobei in einem Schritt S5 eine zu überprüfende Komponente, im Beispiel ein FPGA 150, initialisiert wird. Bevorzugt umfasst das FPGA 150 einen Security-Prozessor mit einem Computerbusanschluss. Nach Initialisierung des FPGA 150 wird in einem Schritt S6 eine (bevorzugt gesicherte) Verbindung mit dem Secure-Element 200 hergestellt. Nachfolgend kann auch an dieser Stelle die Anwendung des Ursprungsnachweises erfolgen. Anschließend erfolgt die Übertragung des Ist-Zustandswertes 233 des FPGA 150 an das Secure-Element 200. Das Secure-Element 200 prüft den Ist-Zustandswert 233 mit einem in dem Secure-Element hinterlegten zugehörigen Soll-Zustandswert 235. Dies erfolgt in der Steuereinheit 210 des Secure-Elements 200. Das Ergebnis, ob das Bauteil bzw. das FPGA 150 vertrauenswürdig ist, also der Ist-Zustandswert positiv bewertet wird, wird die Ausführung des Programms fortgesetzt.

In einem Schritt S7 wird in Abhängigkeit des Ergebnisses der Überprüfung der Vertrauenswürdigkeit des FPGA 150 entschieden, wie der Prozess fortgeführt wird. Bei negativer Vertrauenswürdigkeit des FPGA 150 wird das Programmmodul 320 aufgerufen S8, das beispielsweise eine Fehlermeldung erzeugen oder einen Reset oder Power-Reset ausführen kann. Das nachfolgende Booten des Betriebssystems könnte unterbunden werden oder lizensierte Programme, die auf der elektronischen Baugruppe gestartet werden sollten, können mangels Lizenz nicht normal ausgeführt werden. Es ist auch denkbar, dass eine Programmverweisung aufgerufen werden kann, die einen weiteren Prozess in dem Programmmodul 320 auslöst, der beispielsweise von einem Steuerprogramm entsprechend der Verarbeitung der Records in dem Secure-Element 200 ermittelt wurde. Ein solcher Prozess kann beispielsweise einen Ladevorgang von rekonfigurierbarer Logik umfassen, um eine Rekonfiguration des FPGA 150 einzuleiten.

Bei positivem Abgleich in Schritt S7 wird der Prozess fortgesetzt. Wie hier exemplarisch an der Überprüfung einer UID-PUF-Einheit 170 gezeigt, können weitere Bauteile in analoger Weise überprüft und verifiziert werden.

Nach Abschluss der Überprüfung weiterer Bauelemente oder Komponenten wird in einem weiteren Schritt S10 ein Boot-Vorgang eines Betriebssystems (OS) 330 erreicht. Auch hier kann wiederum in einem Schritt S11 das Secure-Element 200 aufgerufen werden, um eine Überprüfung durchzuführen, beispielsweise einen Software-Stand mit einem hinterlegten Soll-Zustandswert eines Software-Stands zu vergleichen oder um Lizenzen zu prüfen oder abzufragen.

Der Boot-Prozess wird in dem gleichen Schema fortgesetzt und umfasst den Abgleich bzw. geprüften Aufruf eines lizensierten Anwendungsprogramms 340, wobei auch hier wieder auf das Secure-Element 200 zugegriffen wird. Falls in einem der vorherigen Schritte in der Boot Control Phase ein Ist-Zustandswert 233 nicht als vertrauenswürdig gemäß dem Soll-Zustandswert 235 im Secure-Element 200 angesehen und hierdurch eine Lizenzeinschränkung innerhalb des Secure-Element 200 durchgeführt wurde, kann das betroffene, lizensierte Anwendungsprogramm 340 nicht starten. Wurde das Kriterium der Vertrauenswürdigkeit erfüllt, stehen die benötigten Lizenzen im Secure-Element 200 zur Verfügung und ermöglichen einen normalen Start des Anwendungsprogramms.

Weitere Schritte nach dem hier beschriebenen Ablauf können in dem Boot-Prozess ausgeführt werden. Sie sind durch die gestrichelt gezeichneten Objekte in Figur 6 angedeutet.

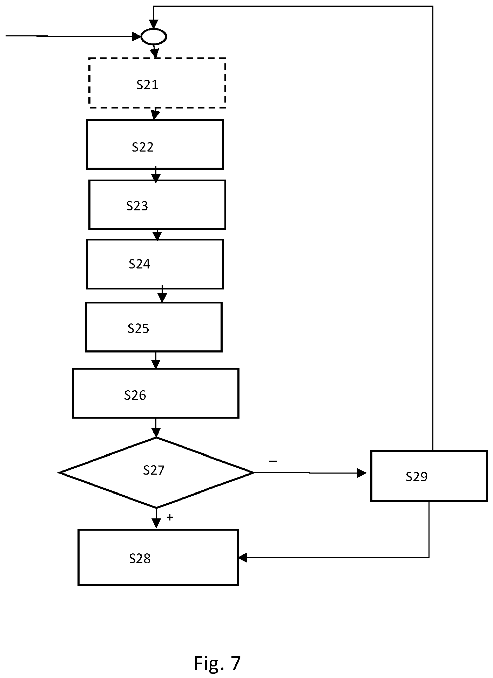

Figur 7 zeigt exemplarisch einen Teil eines Boot-Prozesses einer Baugruppe 100, deren Vertrauenswürdigkeit geprüft werden soll.

In einem ersten optionalen Schritt S21 startet eine Plattform oder elektronische Baugruppe 100 mit ihrer CPU 110 beim Einschalten den Ladevorgang eines BIOS, um die Hardware-Komponenten und Bauteile der Baugruppe 100 zu initialisieren und an einem internen Computer-Bus für weitere Schritte der Inbetriebnahme durch das Betriebssystem verfügbar zu machen.

In einem zweiten Schritt S22 initialisiert das Secure-Element 200 als zentraler Vertrauensanker der Baugruppe 100 das Computer-Bus-Interface, um mit den daran angeschlossenen Komponenten und Bauteilen 180 der Baugruppe 100 kommunizieren zu können. Es wird vereinfachend vorausgesetzt, dass über den Computer-Bus ein Austausch von Information mit anderen Bauteilen 180 nach abgeschlossener Initialisierungsphase hergestellt werden kann.

In einem nächsten Schritt S23 wird ein interner Prozess in dem Secure-Element 200, ein sogenanntes Boot-Checking-Programm, gestartet. Der Vorgang liest gekennzeichnete P-Records 234 in sequentieller Reihenfolge (oder auch abweichend davon selektiert) aus dem Record-Speicher 230 aus und entschlüsselt diese optional.

Die ausgelesenen Daten können beispielsweise Sollwerte der elektronischen Baugruppe 100 in Bezug auf die bevorzugte oder zu erwartende Abfolge von Boot-Prozessen sein, die am Ende eines Entwicklungsprozesses als typische Sollwerte dieser elektronischen Baugruppe ermittelt wurden.

Ein gelesener P-Record 234 kann auch Daten enthalten, die zuvor in einem Herstellungs- und/oder Testprozess der Baugruppe von autorisierten Herstellern generiert und in den P-Record 234 geschrieben wurden. Dies können wichtige Daten aus den Fertigungsprozessen sein, aber auch Werte einzelner Bauteile oder Komponenten, die in Tests und Inbetriebnahmeprozeduren ermittelt und danach als Sollwert (Soll-Zustandswert) autorisiert in einen P-Record 234 geschrieben werden.

Optional wird die verketteten Records of Trust, bestehend aus den P-Records 234, nun ganz oder teilweise kryptografisch validiert. Hierzu werden bevorzugt auch Herstellerzertifikate 227 geprüft, ob sie zu einer hierarchischen Public Key Infrastruktur PKI, beispielsweise eines Herstellerbunds, gehören. Zusätzlich wird bevorzugt die Signatur der P-Records 234 mit dem Public-Key des Herstellerzertifikats validiert.

In einem weiteren Schritt S24 werden die P-Records 234 für die Überwachung des vertrauenswürdigen Bootprozesses ausgewählt.

Gemäß Schritt S25 wird ein Kommunikationskanal zwischen dem Secure-Element 200 und der selektierten Komponente 180 aufgebaut, unter der Voraussetzung, dass sich die Komponente in einem aktiven Status befindet. Über diesen Kanal werden die Ist-Werte (Ist-Zustandswerte 233) der selektierten Komponente ausgelesen. Dies können beispielsweise eine UID sein oder ein geschützt übertragener Fingerprint der Komponente.

In einem weiteren Schritt S26 wird der Soll-Zustandswert 235 einer Komponente aus einem P-Record 234 mit dem in Schritt S25 ausgelesenem Ist-Zustandswert 233 in Bezug gesetzt und ausgewertet.

In einem folgenden Schritt S27 entscheidet ein Auswertealgorithmus darüber, ob ein erfolgreiches Ergebnis erzielt wurde. Je nach Ergebnis einer Vergleichs- oder einer Analyse-Operation wird dann ein nächster Prozess eingeleitet. Trifft ein erwartetes, positiv zu bewertende Ergebnis nicht ein, unterbricht der interne Prozess einen per Record vorgesehenen weiteren Verlauf des Boot-Prozesses oder der interne Prozess gibt für den weiteren Verlauf benötigte Ressourcen nicht frei. Zusätzlich kann optional ein Boot-Control-Process-Record (BP-Record 239) in dem Record-Speicher 230 hinzugefügt werden.

In einem konkreten Fall wäre z.B. der ausgelesene Fingerprint aus einer Komponente mit dem gespeicherten Fingerprint eines P-Records nicht in Übereinstimmung. Gemäß Flussdiagramm ist dies beispielhaft der Ausgang zu Schritt S29, welcher zum Anfang des Reset-Status oder des Power-on-Reset-Status (POR-Status) rückführt. Alternativ können in Schritt S29 auch weitere Restriktionen vorgesehen sein, wie etwa keine Erlaubnis den nächsten Bootlevel auszuführen (No Flash enabling to load next Boot Level), keine Erlaubnis eine Ziel-Software zu laden oder auszuführen (No license enabling for target Software) oder keine Herausgabe eines Verschlüsselungsschlüssels (No delivery of decryption key).

Im positiven Fall des Vergleichs in Schritt S27 kann der weitere Verlauf der Boot- Prozesse unter Kontrolle eines Boot-Checking-Programms (BCP, Boot Control Process) fortgesetzt werden.

Ein nächster Schritt S28 im Boot-Prozess wird gemäß Ablaufsteuerung bevorzugt erst dann initiiert, wenn der vorangegangene Boot-Prozess oder Boot-Teilprozess positiv abgeschlossen werden konnte. Dazu sendet das Boot-Checking-Programm optional eine Nachricht an die zuletzt aktive Komponente der Baugruppe oder an die Verarbeitungseinheit 110 oder das FPGA 150, dass die Abfrage des Status der Komponente erfolgreich geprüft wurde und dass die Programmflusskontrolle zur Initialisierung des nächsten Programmabschnitts freigegeben ist. Mit anderen Worten erfolgt der weitere Ablauf in der Sequenz der Boot-Prozesse "frei" laufend bis zu einem nächsten Kontrollpunkt im Ablauf an dem z.B. eine weitere Komponente, nach Initialisierung durch Treiber und bevorzugt Herstellung eines Kommunikationskanals, auf Vertrauenswürdigkeit (Authentizität) der Hardware abgefragt werden kann.

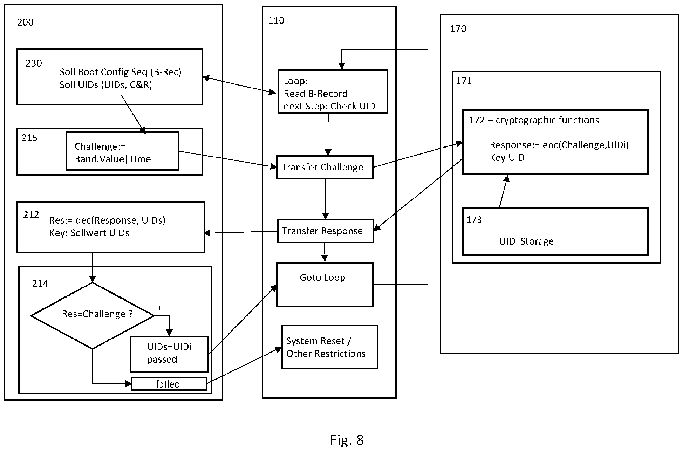

In Figur 8 ist beispielhaft die Überprüfung eines Hardware-Merkmals auf der Basis der Soll-Zustandswerte 235 in einem Record of Trust dargestellt.

Die CPU 110 der elektronischen Baugruppe führt das Startprogramm aus und prüft die Verfügbarkeit eines Secure-Element 200. Nach einer optionalen Prüfung des Ursprungsnachweises 222 liest die CPU 110 einen bevorzugt vorhandenen B-Record aus, der eine Auflistung von zu prüfenden Hardware-Merkmalen der Baugruppe, also der zu überprüfenden Komponenten, umfasst. Das in der Reihenfolge zunächst zu prüfende Hardware-Merkmal, also das nächste Bauteil der Baugruppe 100, ist in diesem Beispiel die UID-Unit 170. Hierzu erzeugt das Secure-Element 200 eine zufällige Datenfolge, bevorzugt mit angehängtem Zeitstempel, in der RNG-Einheit 215 (Random Number Generator). Diese Datenfolge wird über den Computer-Bus mit Unterstützung der CPU 110 zur UID-Unit 170 übertragen.

Die UID Unit 171 verwendet kryptografische Funktionen in einem UID-Co-Processor 172 und verschlüsselt die Datenfolge mit einem Schlüssel UIDi, der aus dem UID-Speicher 173 genommen wird. Der UID-Speicher 173 könnte auch aus einer Physical Unclonable Function bestehen.

Die verschlüsselten Daten werden über den Computer-Bus zurück an das Secure-Element 200 übertragen (Transfer Response) und dort von der Prozessoreinheit 212 des Secure-Elements 200 entschlüsselt. Der zum Entschlüsseln verwendete Schlüssel UIDs wird als Soll-Zustandswert aus dem IB-Record 236, der zu der geprüften UID-Unit gehört und während der ersten Inbetriebnahme der Baugruppe in dem Record-Speicher 230 gespeichert wurde, ausgelesen.

Der Auswertealgorithmus im Co-Processor des Secure-Elements 200 prüft das Ergebnis der Entschlüsselung der Antwort (Response) auf Gleichheit mit der Challenge, die verschlüsselt und an die UID-Unit 170 gesendet wurde. Dies ist dann der Nachweis, dass die UIDs im IB-Record des Sollwertspeichers (Record-Speicher 230) und die verwendete UIDi im UID-Speicher 173 der UID-Unit 170 gleich sind.

Bei Gleichheit ist die Prüfung erfolgreich, und somit werden keine Einschränkungen durch das Secure-Element 200 vorgenommen und die Antwort wird zurück an die CPU 110 übermittelt. Die CPU 110 kann mit der nächsten Prüfung fortfahren.

Bei Ungleichheit schlägt die Prüfung fehl und das Secure-Element kann Einschränkungen für den weiteren Bootverlauf des Devices bzw. der Baugruppe vornehmen, beispielsweise einen System Reset oder das Sperren von Speicherressourcen oder Betriebslizenzen.

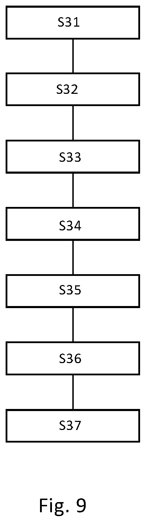

Figur 9 zeigt den prinzipiellen Ablauf des erfindungsgemäßen Verfahrens zum Nachweis einer vertrauenswürdigen elektronischen Baugruppe 100 mit einer CPU 110, einem Businterface und einem Secure-Element 200. Das Secure-Element hat einen Record-Speicher 230 mit einem Soll-Zustandswert 235 der Baugruppe 100 oder von Bauteilen der Baugruppe und einen Ursprungsnachweis 222, der bevorzugt in einem Secure-Speicher 220 abgelegt ist.

In einem ersten Schritt S31 wird ein Ist-Zustandswert 233 eines Ist-Zustands der Baugruppe ermittelt. Dies kann beispielsweise durch Auslesen von Merkmalen einzelner Komponenten oder Bauteile oder mittels Sensoren erfolgen. In einem weiteren Schritt S32 erfolgt optional ein Überprüfen und Ermitteln, ob die Baugruppe ein Secure-Element 200 mit Ursprungsnachweis 222 hat.

Ein weiterer Schritt S33 sieht ein Auslesen des Soll-Zustandswerts 235 aus dem Record-Speicher 230 vor, wobei der Soll-Zustandswert 235 einem Soll-Zustand der Baugruppe 100 entspricht, z.B. zum Produktionszeitpunkt.

Ein weiterer Schritt S34 umfasst das Prüfen des Secure-Elements 200 auf Echtheit durch Überprüfen seines Ursprungsnachweises 220. Ein Schritt S35 umfasst das Verarbeiten des Ist-Zustands 233 und des Soll-Zustands 235 und/oder eines Vergleichs der beiden Zustände.

Ein Bewerten und Entscheiden, ob der Ist-Zustand mit dem Soll-Zustand insoweit ähnlich oder kompatibel ist, dass ein Vertrauenskriterium erfüllt ist, oder ob die beiden Zustände übereinstimmen, erfolgt in einem Schritt S36. Ein optionaler weiterer Schritt S37 sieht vor, dass die Verwendung der Baugruppe beeinflusst oder autorisiert wird. Alternativ oder zusätzlich kann die Autorisierung oder das Beeinflussen eines Prozesses, den die Baugruppe ausführt, in Abhängigkeit der in Schritt S36 durchgeführten Bewertung erfolgen.

Das hier beschriebene Verfahren kann vorsehen, dass einzelne Verfahrensschritte in einer anderen Reihenfolge abgearbeitet werden. Darüber hinaus können einzelne Schritte oder einige der vorgegebenen Schritte mehrfach ausgeführt werden.

Alternativ und zusätzlich können einzelne Verfahrensschritte nicht nur auf die Baugruppe 100, sondern auch auf Komponenten oder Bauteile der Baugruppe 100 angewendet werden. So hat es sich als sinnvoll erwiesen, zur Ermittlung des Ist-Zustands der Baugruppe den Ist-Zustand von einzelnen Bauteilen oder Elementen der Baugruppe zu prüfen. Hierbei wird das Verfahren in äquivalenter Weise auf die einzelnen Bauteile angewendet. Das Ermitteln eines Ist-Zustands der Baugruppe 100 erfolgt dann durch mehrfache Abfrage einzelner Bauelemente und deren Ist-Zustände. Die ist-Zustände der Bauteile oder Bauelemente bzw. Komponenten werden jeweils geprüft und mit hinterlegten Soll-Zustandswerten im Record-Speicher 230 verglichen. Eine Bewertung der Vertrauenswürdigkeit der Baugruppe kann dadurch erfolgen, dass mehrere einzelne Bauelemente auf Vertrauenswürdigkeit geprüft werden und sich so ein Gesamtbild einer Vertrauenswürdigkeit der Baugruppe ergibt. Dabei kann eine Gewichtung einzelner Bewertungen von Bauteilen bevorzugt in Abhängigkeit der Sicherheitsrelevanz der Bauteile geschehen. Für einzelne Bauteile kann eine 100% Überprüfung und Bewertung festgelegt sein. Die Überprüfung der Vertrauenswürdigkeit kann nicht nur Komponenten und Bauteile umfassen, sondern auch Firmware oder Software.

Die Erfindung wird nachfolgend noch einmal zusammenfassend dargelegt:
Die Erfindung beschreibt ein Verfahren zum Nachweis einer vertrauenswürdigen Hardwarekomponente oder Baugruppe, bevorzugt über den gesamten Produktlebenszyklus. Der Nachweis kann zumindest in Teilen zu jeder Zeit lokal erbracht werden können, teils durch eine kryptografische Überprüfung der in einem Secure-Element abgespeicherten Datensätze (Records) und teils durch eine Erhebung von systemspezifischen Eigenschaften (z.B. Hardware-Fingerprint einer Komponente), die mit in einem Secure-Element hinterlegten Eigenschaften exakt oder gewichtet verglichen und abschließend z.B. durch einen Schwellwert oder eine ja/nein Entscheidung beurteilt werden.

Die erwähnten, abgespeicherten Datensätze können aus Echtheitsnachweisen, beispielsweise einer bevorzugt kryptografischen Chain of Trust (Beispiel PKI) oder aus (kryptografischen) Nachweisen von bei vertrauenswürdigen Herstellern erfolgten Produktionsschritten der Hardwarekomponente bestehen.

Die Nachweiserbringung dient einerseits zur Überprüfung, ob eine Hardware-komponente oder Baugruppe vertrauenswürdig ist; sie kann aber auch einen direkten Einfluss auf die Verwendung der Betriebsfähigkeit der Hardware oder Baugruppe nehmen. Dies geschieht exemplarisch im Zusammenhang mit einem "Trusted Bootprozess", der nur durchgeführt werden kann, wenn der oben beschriebene Nachweis der Vertrauenswürdigkeit erbracht werden kann. In einer bevorzugten Ausführung geschieht dies dadurch, dass ein zur Entschlüsselung eines Boot-Images benötigter Schlüssel nur nach einer oben beschriebenen Prüfung bereitsteht.

In einer weiteren Ausführung kann die Freigabe eines nicht flüchtigen Speichers, dass ein Boot-Image umfassen kann, erst nach einer oben beschriebenen Prüfung verwendet werden. In einer weiteren Ausführung kann die Hardwarekomponente oder Baugruppe bei negativer Prüfung automatisch zurückgesetzt werden. In einer weiteren Ausführung kann die Echtheit auch über eine Datenverbindung zu einem Server überprüft werden.

Die Erfindung betrifft auch ein Verfahren zum sicheren Booten eines Systems, wobei ein Verfahren zum Nachweis einer vertrauenswürdigen Hardwarekomponente ausgeführt wird. Die Erfindung betrifft auch ein Verfahren zum Nachweis einer vertrauenswürdigen elektronischen Baugruppe, wobei
mindestens ein Element zum kryptografischen Ursprungsnachweis in einem auf der Baugruppe befindlichen Secure-Element gespeichert ist und/oder die Prüfung einer systemspezifischen Eigenschaft der Hardwarekomponente den Bootprozess beeinflusst und/oder autorisiert und/oder eine gewichtete Bewertung eines kryptografischen Ursprungsnachweises oder der systemspezifischen Eigenschaften der Hardwarekomponente oder Baugruppe den Bootprozess beeinflussen und/oder autorisieren kann und/oder eine gewichtete Bewertung in einem Secure-Element teilweise oder vollständig durchgeführt wird, bevorzugt statt in einem Hauptprozessor (CPU) der Baugruppe und/oder der erwartete, gewichtete Wert aus den systemspezifischen Eigenschaften in einem Secure-Element gespeichert ist und/oder mindestens ein Element zum Nachweis der vertrauenswürdigen Produktion einer Baugruppe oder Hardware-komponente vorhanden ist und/oder mindestens ein Datensatz den Bootprozess beeinflusst und/oder ein Datensatz zum Nachweis der vertrauenswürdigen Produktion in einem auf der Hardwarekomponente befindlichen Secure-Element gespeichert ist.

### Definitionen:

System on Chip (SoC) bezeichnet ein System von Bauelementen, die i.d.R. auch eine oder mehrere Steuereinheiten mit einer entsprechenden Peripherie enthalten. Alle Teile sind in einer i.d.R. miniaturisierten Einheit untergebracht, z.B. in Form eines Packages (SiP-System in package)

Secure-Element (SE) ist ein üblicherweise geschützter Chip mit einer Steuereinheit (CPU), einem nicht flüchtigen Record-Speicher und einem Secure-Speicher. Es hat bevorzugt u.a. einen kryptografischen Co-Prozessor (secure engine) zur sicheren Ausführung von kryptografischen Funktionen und typische Bauteile eines embedded Controllers wie Interrupt Controller RAM, Flash, Interfaces.

Eine elektronische Baugruppe ist eine fest zusammengefügte Einheit von wenigen bis vielen elektronischen, analogen und digitalen Bauelementen oder Komponenten, die von einer oder mehreren CPUs bzw. Controllern gesteuert werden, die auf typische Bauelemente wie flüchtige und nicht flüchtige Speicher, Interface Elemente und zusätzliche Bauelemente oder Systems on Chip (SoCs) sowie ein Secure-Element zurückgreifen können.

Ein Soll-Zustandswert einer elektronischen Baugruppe umfasst einen oder viele einzelne Sollwerte, die statisch ausgelesen oder ermittelt oder dynamisch über die Zeit aufgenommen werden oder durch eine kryptografische Operation entstehen können. Die Ermittlung geschieht bevorzugt auch durch die Verwendung von Sensoren, SoCs oder speziellen Bausteinen mit unterschiedlichen Möglichkeiten zur Erzeugung einer digitalen Identität. Als Soll-Zustandswerte im erweiterten Sinn können auch Zustandswerte oder Ergebnisse abgespeichert werden, die im Rahmen eines optional verteilten Produktionsprozesses bereits in Form eines Records im Secure-Element in den Records of Trust abgespeichert wurden.

Ein Record (im Record-Speicher) bezeichnet hier einen zusammenhängenden Datensatz, dessen Inhalt integer ist, und der bevorzugt von einer autorisierten Instanz kryptografisch unterschrieben wurde. Datensätze eines Records umfassen z.B. Informationen, Zustandswerte und Nutzdaten über die elektronische Baugruppe, deren Komponenten und über deren gesamten Lebenszyklus. Die so entstehenden Records sind bevorzugt in sinngebender Reihenfolge zu einer Kette verbunden, deren Anfang der erste Produktionsschritt und optional ein Ursprungsnachweis bildet, und deren Ende Daten zur Außerdienststellung beinhalten könnte. Diese Kette wird Records of Trust genannt. Die Kette kann Abzweigungs- und Wiedereingliederungszweige haben.

Für den Nachweis zur Vertrauenswürdigkeit werden vorwiegend Records mit Daten zum Sollzustand der elektronischen Baugruppe optional auch in unterschiedlichen Betriebszuständen gespeichert. Die Verbindung der Records zu einer Kette wird bevorzugt mit Hilfe von kryptografischen Funktionen wie z.B. einem Hashwert hergestellt.

Eine kryptografische Unterschrift erfolgt typischerweise durch eine Signatur mit einem geheimen, asymmetrischen Schlüssel, welcher im Besitz beispielsweise einer autorisierten Maschine, Computer, Person, Behörde oder Zertifizierungsstelle (Ersteller) ist. Der zugehörige öffentliche Schlüssel wird zusammen mit einem kryptografisch unterschriebenen Ersteller-Zertifikat bevorzugt mit auf dem Secure-Element abgespeichert oder auf der elektronischen Baugruppe, sodass eine Prüfung der Record-Kette bezüglich Integrität der Daten und Authentizität der Ersteller eines Records jederzeit möglich ist, sofern die Ersteller-Zertifikate in einer hierarchischen Public Key Infrastruktur erstellt wurden. Die aus Records und einem Ursprungsnachweis erstellten Records of Trust tragen somit zur Vertrauenswürdigkeit einer elektronischen Baugruppe bei und begründen eine digitale Identität. Der Ursprungsnachweis ist bevorzugt das erste Element der Kette.

Ein Ursprungsnachweis eines Secure-Elements (222) besteht aus einem Ursprungszertifikat (224) und einem privaten Schlüssel (226). Das Ursprungszertifikat ist bevorzugt der Beginn der Records of Trust. Dem Ursprungszertifikat können alle weiteren Typen von Records folgen, verbunden durch eine kryptografische Funktion.

Im Ursprungszertifikat sind enthalten der Public-Key zu (226), Daten über das Secure-Element, z.B. eine Seriennummer, bevorzugt weitere, typische Elemente für eine Zertifikatsverwaltung wie z.B. Herstellerreferenz, Zertifikats-ID, Datum der Erstellung, Ablaufdatum. Das Zertifikat ist signiert mit einem Ersteller-Zertifikat, bzw. des zum Ersteller-Zertifikat gehörenden, privaten Schlüssel.

Das Ersteller-Zertifikat ist ebenso wie die Records Teil einer hierarchischen Public Key Infrastruktur, die es ermöglicht, alle beteiligten Zertifikate in einer hierarchischen Baustruktur auf ein Root-Zertifikat zurückzuführen, um damit den Nachweis zu erbringen, dass das Secure-Element Teil einer PKI Struktur eines Herstellerbundes ist und somit vertrauenswürdig ist. Jeder teilnehmende Hersteller des Verbunds kann durch sein Zertifikat identifiziert werden.

Die PKI Infrastruktur kann in öffentlichen CAs gehostet werden oder auf der Herstellerseite der elektronischen Baugruppe oder in einem Verband oder Netzwerk von vertrauenswürdigen Herstellerfirmen.

Ein Security-Prozessor oder Secure Engine umfasst zumindest eine CPU, einen geschützten, nur von der CPU addressierbaren Speicher und einen geschützten, nur von der CPU addressierbaren Record-Speicher. Sie haben aber keinen Ursprungsnachweis in einem gesicherten Speicher.

Soll-Zustand, Ist-Zustand und Zustand einer Komponente bzw. Hardwarekomponente umfasst Daten und Informationen zur Konfiguration, den Aufbau, Design, etc. der (Hardware-)Komponente und/oder von Eigenschaften und Charakteristika der Komponente oder systemspezifischer Eigenschaften, wie beispielsweise Stromverbrauch, Temperatur, Abwärme, Taktraten, Verarbeitungsfrequenzen o.ä.. Gleiches gilt für die Zustände einer Baugruppe. Diese können sich aus den Zuständen der Bauteile oder Komponenten zusammensetzen und dabei gewichtet sein.

*autorisieren* bedeutet das freigeben eines weiteren Schritts im Bootprozess z.B. durch Bereitstellen eines Schlüssels und durch das Freischalten von weiteren Komponenten wie Programmen oder Speicherbereiche.

Der Soll-Zustandswert umfasst eindeutige Daten oder Informationen zu einer Hardware-Komponente, die zum Zeitpunkt des Herstellungsprozesses generiert werden oder bereits vorliegen. Der Soll-Zustandswert kann ein Datensatz sein und z.B. als sogenannter P-Record als interpretierbare Information gespeichert sein, z.B. in dem Record-Speicher, wobei die Speicherung bevorzugt während des Herstellungsprozesses erfolgt. Der Soll-Zustandswert kann Ursprungsnachweise in Form von Hash-Werten, einer Unique ID, eines PUF oder eines POK oder einer PKI (Public Key Infrastructure) umfassen. Der Soll-Zustandswert oder wenigstens Teile der enthaltenen Daten können verschlüsselt sein.

IB-Records sind Records, die während der (ersten) Inbetriebnahme der Baugruppe in den Record-Speicher gespeichert werden. Sie enthalten Soll-Zustandswerte, die für jedes Serienstück unterschiedlich sind und in einem Inbetriebnahmeprozess erfasst und als IB-Record im Record-Speicher ergänzt werden müssen, z.B. UIDs von IP-Elementen oder Keys von POKs oder überprüfbare Seriennummer.

BP-Records: Record zur Speicherung von Daten über einen wenigstens teilweise ausgeführten Bootprozess, beispielsweise Records als Logfiles, die im Record-Speicher gespeichert werden. Sie werden z.B. während des Boot-Prozesses oder der Überprüfung auf Vertrauenswürdigkeit erzeugt.

B-Records umfassen eine Bootkonfiguration, Informationen zur Art und Reihenfolge der abzuprüfenden Hardware-Merkmale, Auflistung der benötigten P-Records oder IB-Records.

*Beeinflussen* bedeutet abbrechen, fortführen, blockieren, zurücksetzen (Reset), verhindern.

*Systemspezifische* Eigenschaften sind Messgrößen wie z.B. Spannung, Strom, Zeit, Frequenz einer Hardwarekomponente oder spezielle ID zur Erschaffung einer nicht kopierbaren/klonbaren Identität wie zum Beispiel Phyiscal Unclonable Functions (PUF) oder Physical, obfuscated Keys (POK), Secure Elements mit überprüfbaren Herkunftsnachweis.

*Hardwarekomponente* umfasst mindestens eine Befehlsausführungseinheit.

Datensatz ist eine optional kryptografisch abgesicherte Datenmenge, die einen vertrauenswürdigen Produktionsschritt repräsentiert.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

## Patentansprüche

1. Verfahren zum Nachweis einer vertrauenswürdigen elektronischen Baugruppe (100) mit einer CPU (110), einem Bus-Interface und einem Secure-Element (200) mit einer Steuereinheit (210), wobei das Secure-Element (200) einen Ursprungsnachweis (222) umfasst und einen Record-Speicher (230) mit einem Soll-Zustandswert (235) der Baugruppe (110) hat, mit folgenden Schritten:
Ermitteln eines Ist-Zustandswerts (233) eines Ist-Zustands der Baugruppe (100);
Auslesen des Soll-Zustandswerts (235) aus dem Record-Speicher (230), wobei der Soll-Zustandswert (235) einen Soll-Zustand der Baugruppe (100) darstellt;
Prüfen des Secure-Elements (200) auf Echtheit durch Überprüfen des Ursprungsnachweises (222) des Secure-Elements (200),
Verarbeiten des Ist-Zustandswerts (233) und des Soll-Zustandswerts (235) und/oder Vergleichen des Soll-Zustands und des Ist-Zustands;
Bewerten und entscheiden in der Steuereinheit (210) des Secure-Elements (200), ob der Ist-Zustand mit dem Soll-Zustand insoweit ähnlich oder kompatibel ist oder übereinstimmt, dass ein Vertrauenskriterium erfüllt ist; und
Autorisieren und/oder Beeinflussen der Verwendung der Baugruppe (100) und/oder eines Prozesses, den die Baugruppe (100) ausführt, in der Steuereinheit (210) des Secure-Elements (200) und in Abhängigkeit der durchgeführten Bewertung.

2. Verfahren nach Anspruch 1, **dadurch gekennzeichnet, dass** das Autorisieren und/oder Beeinflussen ein Sperren der Baugruppe (100), ein Sperren und/oder Freigeben von Teilen der Baugruppe (100) oder Komponenten der Baugruppe (100), ein Reset der Baugruppe (100) oder ein Abbruch des Prozesses sein kann.

3. Verfahren nach Anspruch 1 oder 2, **dadurch gekennzeichnet, dass** der Ursprungsnachweis (222) in dem Secure-Element (200) eine Seriennummer des Secure-Elements umfasst und/oder der Ursprungsnachweis (222) in dem Secure-Element (200) verschlüsselt gespeichert ist, bevorzugt in einem Secure-Speicher (220), der von dem Record-Speicher (230) verschieden ist.

4. Verfahren nach einem der vorhergehenden Ansprüche, **dadurch gekennzeichnet, dass** der Ursprungsnachweis (222) ein Ursprungszertifikat (223) umfasst, das bevorzugt ein Schlüsselzertifikat mit einem Public-Key (224) und einem Private-Key (226) ist, wobei das Überprüfen des Ursprungsnachweises (222) zum Echtheitsnachweis des Secure-Elements (200) die folgenden Schritte umfasst:
Auslesen eines Public-Keys (224) des Secure-Elements (200) aus dem Secure-Speicher (220),
Überprüfen, ob der zum Public-Key (224) gehörende Private-Key (226) in dem Secure-Element (200) vorhanden ist.

5. Verfahren nach Anspruch 4, **dadurch gekennzeichnet, dass** das Prüfen des Vorhandenseins des Private-Keys (224) in dem Secure-Element (200) durch die weiteren Schritte erfolgt:
Erzeugen eines beliebigen Datenwertes,
Senden des Datenwertes an das Secure-Element (200);
Verschlüsseln des Datenwertes mit dem Private-Key (226) in dem Secure-Element (200),
Ausgeben eines Ergebniswertes aus dem Secure-Element (200),
Entschlüsseln des Ergebniswertes mit dem Public-Key (224),
Überprüfen des Ergebniswertes in Abhängigkeit von dem erzeugten Datenwert.

6. Verfahren nach einem der vorhergehenden Ansprüche, **dadurch gekennzeichnet, dass** das Verfahren während des Bootprozesses der Baugruppe (100) ausgeführt wird und bevorzugt der Bootprozess von Baugruppenkomponenten beeinflusst wird.

7. Verfahren nach einem der vorhergehenden Ansprüche, **dadurch gekennzeichnet, dass** das Verfahren während des Boot-Prozesses ausführbar ist, wobei bevorzugt der Boot-Prozess von dem Verfahren beeinflusst wird, besonders bevorzugt die Abfolge des Boot-Prozesses verändert wird.

8. Verfahren nach einem der vorhergehenden Ansprüche, **dadurch gekennzeichnet, dass** in dem Record-Speicher (230) ein Element zum Nachweis der vertrauenswürdigen Produktion einer Baugruppe (100) in Form eines Soll-Zustandswerts (235) der Baugruppe (100) gespeichert ist, wobei das Element Informationen der Herstellung oder Verarbeitung der Baugruppe (100) umfasst, und wobei in dem Record-Speicher (230) Elemente mit einander verknüpft sind, besonders bevorzugt in Form einer Kette aneinandergereiht sind.

9. Verfahren nach einem der vorhergehenden Ansprüche, **dadurch gekennzeichnet, dass** auf Basis einer erfolgten Überprüfung der Vertrauenswürdigkeit der Baugruppe (100) ein neues Element für den Record-Speicher (230) erzeugt und in dem Record-Speicher (230) abgespeichert wird, wobei bevorzugt die neuen Elemente mit bestehenden Elementen in dem Record-Speicher (230) verknüpft werden, besonders bevorzugt in Form einer Kette verknüpft werden.

10. Verfahren nach einem der vorhergehenden Ansprüche, **dadurch gekennzeichnet, dass** der Soll-Zustandswert (235) mehrere Merkmale der Baugruppe (100) umfasst, wobei bevorzugt die Merkmale spezifische und/oder charakteristische Parameter für die Komponente und/oder Baugruppe (100) sind.

11. Secure-Element zum Nachweis der Vertrauenswürdigkeit einer elektronischen Baugruppe (100), **dadurch gekennzeichnet, dass**
das Secure-Element (200) eine Steuereinheit (210), einen Record-Speicher (230) und einen Secure-Speicher (220) umfasst,
wobei
der Record-Speicher (230) einen Soll-Zustandswert (235) der Baugruppe (100) umfasst,
der Secure-Speicher (220) einen Private-Key (226) eines Ursprungsnachweises (222) umfasst,
das Secure-Element (200) einen Public-Key (224) des Ursprungsnachweises (222) aufweist, der an eine anfragende Verarbeitungseinheit ausgebbar ist,
die Steuereinheit (210) zum Nachweis der Vertrauenswürdigkeit eingerichtet und ausgebildet ist, um:
- einen Ist-Zustandswert (233) der Baugruppe (100) zu empfangen und zu verarbeiten,
- eine Anfrage der Verarbeitungseinheit, ob ein Ursprungsnachweis (222) in dem Secure-Element (200) vorhanden ist, unter Verwendung des Private-Keys (226) zu beantworten,
- den Soll-Zustandswert (235) der Baugruppe (100) aus dem Record-Speicher (230) auszulesen,
- den Ist-Zustandswert (233) und den Soll-Zustandswert (235) zu verarbeiten und/oder zu vergleichen,
- zu bewerten und/oder zu entscheiden, ob der Ist-Zustand mit dem Soll-Zustand insoweit ähnlich oder kompatibel ist oder übereinstimmt, dass ein Vertrauenskriterium erfüllt ist;
- wobei
- das Verarbeiten und/oder Vergleichen des Ist-Zustandswerts (233) und des Soll-Zustandswerts (235) und das Bewerten und/oder das Entscheiden, ob der Ist-Zustand mit dem Soll-Zustand insoweit ähnlich oder kompatibel ist oder übereinstimmt, dass ein Vertrauenskriterium erfüllt ist, in einer Prozessoreinheit (212) und/oder einer KI-Engine (216) des Secure-Elements (200) erfolgt.

12. Secure-Element nach Anspruch 11, **dadurch gekennzeichnet, dass** der Secure-Speicher (220) verschlüsselt ist, bevorzugt wenigstens ein Teil der in dem Secure-Speicher (220) gespeicherten Ursprungsnachweise (222) verschlüsselt sind.

13. Secure-Element nach Anspruch 11 oder 12, **dadurch gekennzeichnet, dass** in dem Record-Speicher (230) die Soll-Zustandswerte (235) kryptografisch abgesichert sind, bevorzugt verschlüsselt, wobei eine Aneinanderreihung von mehreren Soll-Zustandswerten (235) in einer festgelegten Reihenfolge erfolgen muss.

14. Secure-Element nach einem der vorhergehenden Ansprüche 11 bis 13, **dadurch gekennzeichnet, dass** der Record-Speicher (230) mehrere Soll-Zustandswerte (235) der Baugruppe (100) in Form von Records (232) umfasst.

15. Secure-Element nach einem der vorhergehenden Ansprüche 11 bis 14, **dadurch gekennzeichnet, dass** das Secure-Element (200) zum Nachweis der Vertrauenswürdigkeit eine gewichte Bewertung des Ist-Zustandswerts (233) und des Soll-Zustandswerts (235) ausführt, wobei bevorzugt die Steuereinheit eine Prozessoreinheit (212) und eine Boot-Prozess-Engine (214) und/oder eine KI-Engine (216) umfasst und die Prozessoreinheit und/oder die KI-Engine den Überprüfungsprozess zum Nachweis der Vertrauenswürdigkeit ausführt,.

16. Secure-Element nach einem der vorhergehenden Ansprüche 11 bis 14, **dadurch gekennzeichnet, dass** der Soll-Zustandswert (235) mehrere Merkmale der Baugruppe (100) oder einer Komponente der Baugruppe (100) umfasst, wobei bevorzugt die Merkmale spezifische und/oder charakteristische Parameter für die Komponente und/oder Baugruppe (100) sind.

17. Secure-Element nach einem der vorhergehenden Ansprüche 11 bis 15, **dadurch gekennzeichnet, dass** das Secure-Element (200) eine Schnittstelle aufweist, um wenigstens einen Prozessschritt zum Nachweis der Vertrauenswürdigkeit an eine Komponente der Baugruppe (100) auszulagern, wobei bevorzugt ausgetauschte Daten mit der Komponente verschlüsselt werden und besonders bevorzugt die Komponente eine Secure-Engine aufweist, die in einem geschützten Bereich Sicherheitsfunktionen ausführen kann, oder die Komponente durch Sicherheitsmerkmale gesichert ist.

18. Elektronische Baugruppe (100) mit einer CPU, einem Bus Interface und einem Speicher, **dadurch gekennzeichnet, dass** die Baugruppe (100) ein Secure-Element (200) zum Nachweis der Vertrauenswürdigkeit der Baugruppe (100) umfasst, wobei das Secure-Element (200) eine Steuereinheit (210), einen Record-Speicher (230) und einen Secure-Speicher (220) hat, wobei das Secure-Element (200) ausgebildet ist nach einem der Ansprüche 11 bis 17.

19. Hardwarekomponente mit einem geschützten Security-Prozessor zum Nachweis der Vertrauenswürdigkeit einer elektronischen Baugruppe (100), wobei die Hardwarekomponente einen Record-Speicher (230) und einen Secure-Speicher (220) umfasst, **dadurch gekennzeichnet, dass** die Hardwarekomponente Teil der zu überprüfenden Baugruppe (100) ist und dazu eingerichtet und ausgebildet ist, das Verfahren nach einem der Ansprüche 1 bis 10 auszuführen.

20. Computerprogramm zum Ausführen eines Verfahrens nach einem der Ansprüche 1 bis 10.

## Claims

1. Method for verifying a trusted electronic assembly (100) with a CPU (110), a bus interface and a secure element (200) with a control unit (210), wherein the secure element (200) comprises a proof of origin (222) and a record memory (230) with a target state value (235) of the assembly (100), with the following steps:
Determining an actual state value (233) of an actual state of the assembly (100);
Reading the target state value (235) from the record memory (230), where the target state value (235) represents a target state of the assembly (100);
Checking the authenticity of the Secure element (200) by verifying the proof of origin (222) of the Secure element (200),
Processing the actual state value (233) and the target state value (235) and/or comparing the target state and the actual state;
evaluating and deciding in the control unit (210) of the secure element (200) whether the actual state is similar or compatible with the target state or is consistent with the target state that a trust criterion is met; and
authorizing and/or influencing the use of the assembly (100) and/or any process that the assembly (100) performs in the control unit (210) of the Secure element (200) and depending on the evaluation performed.

2. The method of claim 1, **characterized in that** authorizing and/or influencing may include locking of the assembly (100), a locking and/or releasing of parts of the assembly (100) or components of the assembly (100), resetting the assembly (100) or cancelling the process.

3. The method of claim 1 or 2, **characterized in that** the proof of origin (222) in the secure element (200) comprises a serial number of the secure element and/or the proof of origin (222) is stored encrypted in the secure element (200), preferably in a secure memory (220) which is different from the record memory (230).

4. Method according to any of the preceding claims, **characterized in that** the proof of origin (222) includes a certificate of origin (223), which is preferably a key certificate having a public key (224) and a private key (226), wherein the verification of the proof of origin (222) for proof of authenticity of the secure element (200) includes the following steps:
Reading a public key (224) of the secure element (200) from the secure memory (220),
Checking whether the private key (226) belonging to the public key (224) is present in the secure element (200).

5. The method of claim 4, **characterized in that** the verification of the presence of the private key (224) in the secure element (200) is carried out by the further steps:
Generating any data value,
Sending the data value to the Secure element (200);
Encrypting the data value with the private key (226) in the secure element (200),
Outputting a result value from the Secure element (200),
Deciphering the result value with the public key (224),
Checking the result value depending on the generated data value.

6. A method according to any of the preceding claims, **characterized in that** the method is executed during the boot process of the assembly (100) and preferably the boot process is influenced by assembly components.

7. A method according to any of the preceding claims, **characterized in that** the method is executable during the boot process, wherein the boot process is preferably influenced by the method, in particular the sequence of the boot process is preferably changed.

8. A method according to any of the preceding claims, **characterized in that** an element is stored in the record memory (230) to prove the trustworthy production of an assembly (100) in the form of a target state value (235) of the assembly (100), wherein the element comprises information of the manufacture or processing of the assembly (100), and wherein elements are linked to each other in the record memory (230), are particularly preferably strung together in the form of a chain.

9. A method according to one of the preceding claims, **characterized in that** on the basis of a check of the trustworthiness of the assembly (100) a new element is created for the record memory (230) and stored in the record memory (230), wherein the new elements are preferably linked to existing elements in the record memory (230), especially preferably in the form of a chain.

10. A method according to any one of the preceding claims, **characterized in that** the target state value (235) comprises several features of the assembly (100), preferably the features being specific and/or characteristic parameters for the component and/or assembly (100).

11. Secure element for proving the trustworthiness of an electronic assembly (100), **characterized in that**
the secure element (200) comprises a control unit (210), a record memory (230) and a secure memory (220),
whereby
the record memory (230) includes a target state value (235) of the assembly (100),
the secure memory (220) comprises a private key (226) of a proof of origin (222),
the secure element (200) has a public key (224) of the proof of origin (222) that can be issued to a requesting processing unit,
the control unit (210) is set up and trained to demonstrate trustworthiness to:
- receive and process an actual state value (233) of the assembly (100),
- answer a request from the processing unit as to whether proof of origin (222) exists in the secure element (200) using the private key (226),
- read the target state value (235) of the module (100) from the record memory (230),
- process and/or compare the actual state value (233) and the target state value (235),
- assess and/or decide whether the as-is is similar or compatible with the target state or is consistent with the expected state to the extent that a trust criterion is met;
- whereby
- processing and/or comparing the actual state value (233) and the target state value (235) and assessing and/or deciding whether the actual state is similar or compatible with the target state to the extent that a trust criterion is met, is done in a processor unit (212) and/or an AI engine (216) of the secure element (200).

12. Secure element according to claim 11, **characterized in that** the secure memory (220) is encrypted, preferably at least part of the proofs of origin (222) stored in the secure memory (220) are encrypted.

13. Secure element according to claim 11 or 12, **characterized in that** in the record memory (230) the target state values (235) are cryptographically secured, preferably encrypted, wherein a sequence of several target state values (235) must be done in a specified order.

14. Secure element according to any of the preceding claims 11 to 13, **characterized in that** the record memory (230) comprises several target state values (235) of the assembly (100) in the form of records (232).

15. Secure element according to any of the preceding claims 11 to 14, **characterized in that** the secure element (200) performs a weighted assessment of the actual state value (233) and the target state value (235) to prove trustworthiness, wherein the control unit preferably comprises a processor unit (212) and a boot process engine (214) and/or an AI engine (216) and the processor unit and/or the AI engine performs the verification test to prove trustworthiness.

16. Secure element according to any one of the preceding claims 11 to 14, **characterized in that** the target state value (235) comprises several features of the assembly (100) or a component of the assembly (100), the features being preferably specific and/or characteristic parameters for the component and/or assembly (100).

17. Secure element according to any of the preceding claims 11 to 15, **characterized in that** the secure element (200) has an interface to outsource at least one process step for proving trustworthiness to a component of the assembly (100), wherein preferably exchanged data is encrypted with the component and particularly preferably the component has a secure engine which can perform security functions in a protected area, or the component is secured by security features.

18. An electronic assembly (100) comprising a CPU, a bus interface and a memory, **characterized in that** the assembly (100) comprises a secure element (200) to prove the trustworthiness of the module (100), wherein the secure element (200) has a control unit (210), a record memory (230) and a secure memory (220), wherein the secure element (200) is formed according to one of claims 11 to 17.

19. A hardware component comprising a protected security processor for proving the trustworthiness of an electronic assembly (100), wherein the hardware component comprises a record memory (230) and a secure memory (220), **characterized in that** the hardware component is part of the module (100) to be verified and is configured and designed to execute the method according to any one of claims 1 to 10.

20. A computer program for executing a method according to any one of claims 1 to 10.

## Revendications

1. Procédé, destiné à apporter la preuve d'un ensemble électronique (100) fiable, à l'aide d'un CPU (110), d'une interface BUS et d'un élément de sécurité (200) pourvu d'une unité de commande (210), l'élément de sécurité (200) comprenant une preuve d'origine (222) et ayant une mémoire d'enregistrement (230) avec une valeur d'état de consigne (235) de l'ensemble (100), comportant les étapes suivantes, consistant à :
déterminer une valeur d'état réel (233) d'un état réel de l'ensemble (100);
lire la valeur d'état de consigne (235) à partir de la mémoire d'enregistrement (230), la valeur d'état de consigne (235) représentant un état de consigne de l'ensemble (100) ;
contrôler l'élément de sécurité (200) au niveau de son authenticité par vérification de la preuve d'origine (222) de l'élément de sécurité (200),
traiter la valeur d'état réel (233) et la valeur d'état de consigne (235) et / ou comparer l'état de consigne et l'état réel ;
évaluer et décider dans l'unité de commande (210) de l'élément de sécurité (200), si l'état réel est analogue à ou compatible avec ou concorde avec l'état de consigne de manière suffisante pour satisfaire à un critère de confiance ; et
autoriser et / ou influencer l'utilisation de l'ensemble (100) et / ou d'un processus réalisé par l'ensemble (100) dans l'unité de commande (210) de l'élément de sécurité (200) et en fonction de l'évaluation réalisée.

2. Procédé selon la revendication 1, **caractérisé en ce que** l'autorisation et / ou l'influence peut consister dans un blocage de l'ensemble (100), dans un blocage et / ou une libération de parties de l'ensemble (100) ou de composants de l'ensemble (100), dans une réinitialisation de l'ensemble (100) ou dans un arrêt du processus.

3. Procédé selon la revendication 1 ou 2, **caractérisé en ce que** la preuve d'origine (222) dans l'élément de sécurité (200) comprend un numéro de série de l'élément de sécurité et / ou **en ce que** la preuve d'origine (222) est mémorisée sous forme cryptée dans l'élément de sécurité (200), de préférence dans une mémoire de sécurité (220), qui est différente de la mémoire d'enregistrement (230).

4. Procédé selon l'une quelconque des revendications précédentes, **caractérisé en ce que** la preuve d'origine (222) comprend un certificat d'origine (223) qui est de préférence un certificat crypté, doté d'une clé publique (224) et d'une clé privée (226), la vérification de la preuve d'origine (222) destinée à prouver l'authenticité de l'élément de sécurité (200) comprenant les étapes suivantes, consistant à :
lire une clé publique (224) de l'élément de sécurité (200) à partir de la mémoire de sécurité (220),
vérifier si la clé privée (226) associée à la clé publique (224) est présente dans l'élément de sécurité (200) .

5. Procédé selon la revendication 4, **caractérisé en ce que** le contrôle de la présence de la clé privée (224) dans l'élément de sécurité (200) s'effectue au moyen des étapes suivantes, consistant à :
générer une valeur de données quelconque,
envoyer la valeur de données à l'élément de sécurité (200) ;
crypter la valeur de données avec la clé privée (226) dans l'élément de sécurité (200),
éditer une valeur de résultat à partir de l'élément de sécurité (200),
décrypter la valeur de résultat avec la clé publique (224),
vérifier la valeur de résultat en fonction de la valeur de données générée.

6. Procédé selon l'une quelconque des revendications précédentes, **caractérisé en ce que** le procédé est réalisé pendant le processus de démarrage de l'ensemble (100) et de préférence le processus de démarrage de composants de l'ensemble est influencé.

7. Procédé selon l'une quelconque des revendications précédentes, **caractérisé en ce que** le procédé est réalisable pendant le processus de démarrage, de préférence le processus de démarrage étant influencé par le procédé, de manière particulièrement préférentielle, la séquence du processus de démarrage étant modifiée.

8. Procédé selon l'une quelconque des revendications précédentes, **caractérisé en ce que** dans la mémoire d'enregistrement (230) est mémorisé un élément destiné à prouver la production fiable de l'ensemble (100) sous la forme d'une valeur d'état de consigne (235) d'un ensemble (100), l'élément comprenant des informations sur la fabrication ou le traitement de de l'ensemble (100) et dans la mémoire d'enregistrement (230), des éléments étant interconnectés, étant de manière particulièrement préférentielle juxtaposés sous la forme d'une chaîne.

9. Procédé selon l'une quelconque des revendications précédentes, **caractérisé en ce que** sur la base d'une vérification effectuée de la fiabilité de l'ensemble (100), un nouvel élément est généré pour la mémoire d'enregistrement (230) et mémorisé dans la mémoire d'enregistrement (230),
de préférence, les nouveaux éléments étant interconnectés avec des éléments existants dans la mémoire d'enregistrement (230), de manière particulièrement préférentielle, étant interconnectés sous la forme d'une chaîne.

10. Procédé selon l'une quelconque des revendications précédentes, **caractérisé en ce que** la valeur d'état de consigne (235) comprend plusieurs particularités de l'ensemble (100), de préférence, les particularités étant des paramètres spécifiques et / ou caractéristiques pour le composant et / ou pour l'ensemble (100).

11. Elément de sécurité, destiné à prouver la fiabilité d'un ensemble électronique (100), **caractérisé en ce que**
l'élément de sécurité (200) comprend une unité de commande (210), une mémoire d'enregistrement (230) et une mémoire de sécurité (220),
la mémoire d'enregistrement (230) comprenant une valeur d'état de consigne (235) de l'ensemble (100),
la mémoire de sécurité (220) comprenant une clé privée (226) d'une preuve d'origine (222),
l'élément de sécurité (200) comportant une clé publique (224) de la preuve d'origine (222), qui est susceptible d'être éditée à l'attention d'une unité de traitement demandeuse
l'unité de commande (210) destinée à prouver la fiabilité étant configurée et conçue pour :
- réceptionner et traiter une valeur d'état réel (233) de l'ensemble (100),
- répondre à une demande de l'unité de traitement, si une preuve d'origine (222) est présente dans l'élément de sécurité (200), en utilisant la clé privée (226),
- lire la valeur d'état de consigne (235) de l'ensemble (100) à partir de la mémoire d'enregistrement (230),
- traiter et / ou comparer la valeur d'état réel (233) et la valeur d'état de consigne (235),
- évaluer et / ou décider si l'état réel est analogue à ou compatible ou concorde avec l'état de consigne de sorte qu'un critère de confiance soit satisfait ;
- le traitement et / ou la comparaison de la valeur d'état réelle (233) et de la valeur d'état de consigne (235) et l'évaluation et / ou la prise de décision si l'état réel est analogue à ou compatible ou concorde avec l'état de consigne, de sorte qu'un critère de confiance soit satisfait s'effectuant dans une unité de processeur (212) et / ou dans un moteur d'IA (216) de l'élément de sécurité (200).

12. Elément de sécurité selon la revendication 11, **caractérisé en ce que** la mémoire de sécurité (220) est cryptée, de préférence au moins une partie des preuves d'origine (222) mémorisées dans la mémoire de sécurité (220) est cryptée.

13. Elément de sécurité selon la revendication 11 ou 12, **caractérisé en ce que** dans la mémoire d'enregistrement (230), les valeurs d'état de consigne (235) sont sécurisées de manière cryptographique, de préférence cryptées, une juxtaposition de plusieurs valeurs d'état de consigne (235) devant s'effectuer dans un ordre chronologique fixé.

14. Elément de sécurité selon l'une quelconque des revendications précédentes 11 à 13, **caractérisé en ce que** la mémoire d'enregistrement (230) comprend plusieurs valeurs d'état de consigne (235) de l'ensemble (100) sous la forme d'enregistrements (232) .

15. Elément de sécurité selon l'une quelconque des revendications précédentes 11 à 14, **caractérisé en ce que** l'élément de sécurité (200) destiné à prouver la fiabilité procède à une évaluation pondérée de la valeur d'état réelle (233) et de la valeur d'état de consigne (235), de préférence, l'unité de commande comprenant une unité de processeur (212) et un moteur de processus de démarrage (214) et / ou un moteur d'IA (216) et l'unité de processeur et / ou le moteur d'IA réalisant le processus de vérification destiné à apporter la preuve de fiabilité.

16. Elément de sécurité selon l'une quelconque des revendications précédentes 11 à 14, **caractérisé en ce que** la valeur d'état de consigne (235) comprend plusieurs particularités de l'ensemble (100) ou d'un composant de l'ensemble (100), de préférence, les particularités étant des paramètres spécifiques et / ou caractéristiques pour le composant et / ou pour l'ensemble (100).

17. Elément de sécurité selon l'une quelconque des revendications précédentes 11 à 15, **caractérisé en ce que** l'élément de sécurité (200) comporte une interface, destinée à externaliser au moins une étape de processus pour apporter la preuve de la fiabilité vers un composant de l'ensemble (100), de préférence, des données échangées étant cryptées avec le composant et de manière particulièrement préférentielle, le composant comportant un moteur de sécurisation, susceptible de réaliser dans une zone protégée des fonctions de sécurité ou le composant étant sécurisé par des particularités de sécurité.

18. Ensemble électronique (100) pourvu d'un CPU, d'une interface BUS et d'une mémoire, **caractérisé en ce que** l'ensemble (100) comprend un élément de sécurité (200) destiné à apporter la preuve de la fiabilité de l'ensemble (100), l'élément de sécurité (200) disposant d'une unité de commande (210), d'une mémoire d'enregistrement (230) et d'une mémoire de sécurité (220), l'élément de sécurité (200) étant conçu selon l'une quelconque des revendications 11 à 17.

19. Composant matériel pourvu d'un processeur de sécurité protégé, destiné à apporter la preuve de la fiabilité d'un ensemble électronique (100), le composant matériel comprenant une mémoire d'enregistrement (230) et une mémoire de sécurité (220), **caractérisé en ce que** le composant matériel est une partie de l'ensemble (100) qui doit être vérifié et est configuré et conçu pour réaliser le procédé selon l'une quelconque des revendications 1 à 10.

20. Programme informatique, destiné à réaliser un procédé selon l'une quelconque des revendications 1 à 10.
